# EUROPÄISCHE PATENTSCHRIFT

(11) **EP 3 808 499 B1**
(45) Veröffentlichungstag und Bekanntmachung des Hinweises auf die Patenterteilung: **03.04.2024**
(21) Anmeldenummer: 20201295.1
(22) Anmeldetag: 12.10.2020
(51) Int. Cl.: B23Q 1/34, B23B 3/32, B23B 29/00, B23Q 1/62, B23Q 1/56, B23Q 1/58

(54) **WERKZEUGANTRIEBSEINHEIT, DREHVORRICHTUNG UND DREHVERFAHREN**
TOOL DRIVING UNIT, ROTATING DEVICE AND ROTATING METHOD
UNITÉ D'ENTRAÎNEMENT D'OUTIL, DISPOSITIF ROTATIF ET PROCÉDÉ DE ROTATION

(30) Priorität: 14.10.2019 DE 102019127628
(43) Veröffentlichungstag der Anmeldung: 21.04.2021
(73) Patentinhaber: Optotech Optikmaschinen GmbH, 35435 Wettenberg/Launsbach (DE)
(72) Erfinder: MANDLER, Roland, 35452 Heuchelheim (DE)
(74) Vertreter: Patentanwälte Olbricht Buchhold Keulertz

(56) Entgegenhaltungen:
- EP-A1- 0 440 578
- DE-A1-102009 058 649
- DE-U1-202007 008 203
- KR-A- 20040 096 676
- US-A1- 2007 107 568

## Beschreibung

Die Erfindung betrifft ein Verfahren gemäß Anspruch 1, eine Verwendung einer Drehvorrichtung gemäß Anspruch 10 und eine Drehvorrichtung gemäß Anspruch 17.

Werkzeugantriebseinheiten dienen dazu, ein Werkzeug automatisiert an definierten Positionen einer Maschine zu positionieren, um ein Werkstück exakt bearbeiten zu können. Unter anderem finden sich solche Werkzeugantriebseinheiten in Drehvorrichtungen, um ein Drehwerkzeug mit einer Schneide relativ zu einem rotierenden Werkstück positionieren zu können. Verfahrensgemäß wird dann das Drehwerkzeug mit dem Werkstück in Eingriff gebracht und durch die rotierende Hauptbewegung des Werkstücks ein Span vom Werkstück abgehoben. Durch Bewegungen des Drehwerkzeugs relativ zum Werkstück wird dieses durch spanende Entfernung von Material hin zu einer Wunschform bearbeitet.

So ist aus EP 2 998 067 A2 beispielsweise eine Drehvorrichtung bekannt, die zwei Drehstationen mit jeweils einer drehbaren Werkstückspindel zur Aufnahme eines Linsenrohlings und mit jeweils einem Drehwerkzeug zur spanenden Bearbeitung eines aufgenommenen Linsenrohlings aufweist. Der Linsenrohling wird mittels der Werkstückspindel um eine virtuelle Rotationsachse rotiert. Zur Bearbeitung wird das Drehwerkzeug weiter außen mit der Stirnfläche in Eingriff gebracht und dann in Richtung der Rotationsachse bewegt. Es resultiert hierdurch ein spiralförmiger Arbeitspfad. Bei der Linsenbearbeitung, und insbesondere bei der Brillenglasherstellung werden dabei Oberflächen mit einem Höhenprofil erzeugt. Diese bearbeiteten Flächen sind nicht rotationssymmetrisch. Deshalb ist es erforderlich, die Zustellung des Drehwerkzeugs bei jeder Umdrehung des Linsenrohlings entsprechend des Höhenprofils anzupassen. Dafür werden sehr schnell arbeitende Linearmotoren mit geringem Stellweg eingesetzt. Dies haben Piezo-Aktoren oder Schwingspulen und werden unter anderem als Fast-Tool oder Fast-Tool-Servo(motor) bezeichnet.

Aus der EP 0 440 578 A1 ist eine eine Drehvorrichtung bekannt, mit einem Werkstückhalter, der zur Aufnahme des Werkstücks ausgebildet und um eine virtuelle Rotationsachse rotierend angetrieben ist, und mit einem Drehwerkzeug mit einer Schneide, mit einem Hauptzustellantrieb, der eine primäre Zustellbewegung in einer Zustellrichtung bewirkt, wobei das Drehwerkzeug und der Werkstückhalter durch die Zustellbewegung aufeinander zu und voneinander weg bewegbar sind, und mit einem Hauptquerantrieb, der eine primäre Querbewegung in einer Querrichtung quer zur Zustellrichtung bewirkt, wobei das Drehwerkzeug und die Rotationsachse durch die primäre Querbewegung aufeinander zu und voneinander weg bewegbar sind, wobei die Drehvorrichtung einen sekundären Querantrieb aufweist, dessen sekundäre Querbewegungen gleichgerichtet zu denjenigen des Hauptquerantriebs sind, wobei das Drehwerkzeug und die Rotationsachse durch die Überlagerung aus primären und sekundären Querbewegungen aufeinander zu und voneinander weg bewegbar sind.

Problematisch ist im Stand der Technik die Einhaltung der Fertigungstoleranzen in dem Bereich, der unmittelbar die Rotationsachse umgibt. Hebt man das Werkzeug zu früh von der Stirnfläche ab, verbleibt mittig ein Zapfen um die Rotationsachse. Fährt man das Drehwerkzeug komplett bis zur Rotationsachse, ragt die Schneide des Drehwerkzeugs bereits teilweise über die Rotationsachse hinaus. Es kommt dann zu einem Kontakt zwischen der stumpfen Rückseite der Schneide und der bereits bearbeiteten Oberfläche, die hierdurch beschädigt wird. Das Werkstück läuft in diesem Bereich insbesondere in der falschen bzw. umgekehrten Richtung an der Schneide vorbei. Je konkaver oder schräger die Stirnfläche im Bereich der Rotationachse ausgebildet ist, desto größer wird dieses Problem. Außerdem ist das Problem gerade bei optischen Linsen und Gläsern äußerst kritisch, denn es resultieren optische Fehler im Zentrum der Linse. Man behilft sich daher beispielsweise durch die Verwendung möglichst geringer Werkzeugradien, einer Reduktion der Rotationsgeschwindigkeit, einer Reduktion des Anpressdrucks und durch Nachbearbeitungen wie dem Polieren. Bereits mit den bekannten kleinen Werkzeugradien ist eine prismatische Bearbeitung also problembehaftet, denn vor allem bei optischen Linsen und Gläsern lassen sich die Oberflächengüten für Sphäre und Zylinder im Bearbeitungszentrum nur schwer in der Toleranz halten. Dennoch sind die Fertigungszeiten lang und die Herstellung einer qualitativ hochwertigen Fläche im Bearbeitungszentrum teuer. Aufgabe der Erfindung ist es deshalb, Vorrichtungen und Verfahren zur drehenden Bearbeitung eines Werkstückes bereitzustellen, welche eine schnelle und präzise Bearbeitung der Fläche bis hin zur Rotationsachse des Werkstückes erlauben. Eine Lösung die in bestehenden Drehvorrichtungen nachrüstbar ist, wäre dabei wünschenswert.

Hauptmerkmale der Erfindung sind in den Ansprüchen 1, 10 und 17 angegeben. Optionale Ausgestaltungen sind Gegenstand der Unteransprüche sowie der Beschreibung.

Bei einer Werkzeugantriebseinheit für eine Drehvorrichtung zur spanenden Bearbeitung von Werkstücken, mit einem Werkzeughalter zur Aufnahme eines Drehwerkzeugs mit einer Schneide, wobei der Werkzeughalter mit einem ersten Linearmotor aufweisend eine erste Schwingspule oder ein erstes Piezoelement verschiebbar, insbesondere linear verschiebbar, entlang einer Zustellrichtung angetrieben ist, sieht die Erfindung vor, dass der Werkzeughalter mit einem zweiten Linearmotor aufweisend eine zweite Schwingspule oder ein zweites Piezoelement in einer Querrichtung quer zu der Zustellrichtung pendelnd oder verschiebbar angetrieben ist.

Vorteilhaft hieran ist, dass völlig neuartige Bewegungskinematiken bei der Bearbeitung von Arbeitsflächen erzielbar sind. Während zuvor nur in der Zustellrichtung schnelle oszillierende Positionswechsel möglich waren, kann die Schneide nunmehr auch äußerst schnell oszillierend in der Querrichtung bewegt werden. Damit lassen sich auch Drehwerkzeuge mit größerem Krümmungsradius einsetzen, weil nunmehr Arbeitspfade auf der Werkstückoberfläche möglich sind, bei denen die Schneide besser um Positionen herummanövrierbar ist, sodass kein Materialabtrag an ungewollten Stellen erfolgt. Bei der Bearbeitung einer Stirnfläche eines rotierenden Werkstücks ist es hierdurch möglich, je nach Drehwinkelstellung nach links oder rechts vom eigentlichen Bearbeitungspfad abzuweichen. Dreht man die Schneide um 90 Grad besteht außerdem die Option die Schneide stotternd entlang des Bearbeitungspfades zu bewegen. Die Linearmotoren haben Piezo-Aktoren oder Schwingspulen und sind auch als Fast-Tool oder Fast-Tool-Servo(motor) bezeichenbar. Grundsätzlich ließe sich die Erfindung auch mit technisch abweichend ausgeführten Fast-Tool oder Fast-Tool-Servo(motor) realisieren. Möchte man beide Bewegungsprofile in Querrichtung gleichzeitig realisieren, besteht die erfindungsgemäße Ausgestaltungsoption, dass der Werkzeughalter mit einem dritten Linearmotor aufweisend eine dritte Schwingspule oder ein drittes Piezoelement in einer zweiten Querrichtung quer zu der Zustellrichtung und quer zur ersten Querrichtung pendelnd oder verschiebbar angetrieben ist. Damit lässt sich der Werkzeughalter in allen drei Maschinenachsrichtungen, also dreidimensional schnell oszillierend bewegen, insbesondere hinsichtlich der Zustelltiefe (hin/weg bezogen auf das Werkstück) mit dem ersten Linearmotor, quer zur Schnittrichtung (links/rechts bezogen auf die Schnittrichtung) mit dem zweiten Linearmotor und entlang der Schnittrichtung (vor/zurück bezogen auf die Schnittrichtung) mit dem dritten Linearmotor.

Optional können der erste und der zweite Linearmotor (und auch der optionale dritte Linearmotor) innerhalb eines gemeinsamen Gehäuses angeordnet sein. Aufgrund der geringen Stellwege in Quer- und Zustellrichtung ist ein solches Gehäuse relativ klein ausgestaltbar. Auf diese Weise wird eine fertige Baugruppe bereitgestellt, die sowohl austauschbar als auch in Bestandsmaschinen nachrüstbar ist. Der Werkzeughalter sollte aus dem Gehäuse herausragen.

In einer ersten Variante ist der erste Linearmotor gemeinsam mit dem Werkzeughalter in der Querrichtung pendelnd oder verschiebbar mit dem zweiten Linearmotor angetrieben (optional auch in der zweiten Querrichtung pendelnd oder verschiebbar mit dem optionalen dritten Linearmotor angetrieben). Damit ist eine stabile gemeinsame Lagerung des ersten Linearmotors und des Werkzeughalters möglich. Bevorzugt sind der erste Linearmotor und der Werkzeughalter auf einem Schlitten angeordnet, auf dem sie mittels dem zweiten Linearmotor verschiebbar gelagert sind. Auch dieser Schlitten kann in dem optionalen gemeinsamen Gehäuse angeordnet sein. Optional kann der Werkzeughalter starr mit dem ersten Linearmotor verbunden sein. Das ermöglicht hochpräzise Stellwege. Ebenso kann der Werkzeughalter optional starr mit dem zweiten Linearmotor verbunden sein. Damit sind dessen Stellbefehle hochpräzise umsetzbar.

In einer zweiten Variante sind der erste Linearmotor und der zweite Linearmotor (optional auch der optionale dritte Linearmotor) relativ zueinander fixiert befestigt. Sie können sich also nicht relativ zueinander bewegen. Hierdurch lassen sich die zu bewegenden Massen reduzieren und schnellere Verstellungen vornehmen als wenn einer der Linearmotoren von dem anderen mitbewegt werden muss. Dabei ist es möglich, dass der Werkzeughalter schwimmend oder pendelnd oder über ein Biegeelement mit dem ersten Linearmotor verbunden ist. Damit sind definierte Bewegungen zwischen dem Werkzeughalter und dem ersten Linearmotor möglich, die der Werkzeughalter durch den zweiten Linearmotor ausführt. Ergänzend oder alternativ kann der Werkzeughalter schwimmend oder pendelnd oder über ein Biegeelement mit dem zweiten Linearmotor verbunden sein. Damit sind definierte Bewegungen zwischen dem Werkzeughalter und dem zweiten Linearmotor möglich, die der Werkzeughalter durch den ersten Linearmotor ausführt.

Erfindungsgemäß ist vorgesehen, dass der Werkzeughalter, der erste Linearmotor und der zweite Linearmotor (optional auch der optionale dritte Linearmotor) eine Baugruppe ausbilden oder Teil hiervon sind, wobei die Baugruppe auf einem Kreuzschlitten angeordnet ist. Ein Kreuzschlitten ermöglicht zusätzliche Bewegungen zur Positionierung des Werkzeughalters, was insbesondere aufgrund der begrenzten Stellwege der Schwingspule oder Piezoelemente hilfreich ist. Kreuzschlitten sind außerdem in einer Vielzahl von Werkzeugmaschinen bereits vorhanden, sodass die Baugruppe durch Aufsetzen auf solche Kreuzschlitten einfach nachgerüstet werden kann. Zu der Baugruppe kann insbesondere auch das gemeinsame Gehäuse des ersten und zweiten Linearantriebs gehören (optional auch des optionalen dritten Linearmotors).

Optional weist der Kreuzschlitten einen Kreuzschlittenantrieb auf, mit dem die Baugruppe linearverschiebbar entlang der Zustellrichtung und linearverschiebbar entlang der Querrichtung angetrieben ist. Damit sind Bewegungen umsetzbar, die die Schwingspule oder Piezoelemente aufgrund der begrenzten Stellwege nicht alleine umsetzen könnten.

Bevorzugt weisen der erste und zweite Linearantrieb (optional auch der optionale dritte Linearmotor) sowie der Kreuzschlittenantrieb eine gemeinsame Steuer- oder Regeleinheit auf. Hierdurch lassen sich die Bewegungen zum Positionieren des Werkzeughalters gezielt überlagern. Die Regeleinheit sollte aus gleichem Grunde die Rotation des Werkstücks steuern oder regeln.

In einer näheren Ausgestaltung sind die freien Stellwege des Kreuzschlittens wenigstens um das zehnfache größer als die freien Stellwege des ersten und zweiten Linearmotors (optional auch des optionalen dritte Linearmotors). Damit werden große Stellwege beispielsweise für Werkstück- oder Werkzeugwechsel ermöglicht.

Des Weiteren ist in einer speziellen Ausführung vorgesehen, dass der freie Stellwege des ersten Linearmotors entlang der Zustellrichtung wenigstens fünfmal, vorzugsweise wenigstens achtmal, und besonders bevorzugt wenigstens zehnmal so groß ist wie der freie Stellwege des zweiten Linearmotors in der Querrichtung. Der Vorteil hieran ist, dass beim Drehen recht große Höhenunterschiede auf der Oberfläche durch Pendelbewegungen des ersten Linearmotors erzeugbar sind, wohingegen fast immer nur recht kleine Korrekturen der Werkzeugschneide in der Querrichtung erforderlich sind. Die kleinen Stellwege in der Querrichtung erlauben eine stabile Lagerung und eine Fokussierung des zweiten Linearmotors auf schnelle kurze Bewegungen. Der optionale dritte Linearmotor hat vorzugsweise einen freien Stellweg in der Querrichtung, der wenigstens um den Faktor 5, vorzugsweise wenigstens um den Faktor 8, und besonders bevorzugt wenigstens um den Faktor 10 kleiner ist als der freie Stellwege des ersten Linearmotors entlang der Zustellrichtung.

In der Praxis bietet es sich an, die Werkzeugantriebseinheit so auszugestalten, dass der freie Stellwege des ersten Linearmotors entlang der Zustellrichtung zwischen 5 mm und 60 mm, vorzugsweise zwischen 10 mm und 50 mm, weiter bevorzugt zwischen 15 mm und 40 mm, noch weiter bevorzugt zwischen 18 mm und 35 mm, und besonders bevorzugt zwischen 20 mm und 30 mm beträgt. Dieser Stellweg genügt in der Praxis für die meisten schnell zu drehenden Höhenprofile.

Außerdem bietet es sich in der Praxis an, die Werkzeugantriebseinheit so auszugestalten, dass der freie Stellwege des zweiten Linearmotors und/oder des optionalen dritten Linearmotors in der Querrichtung zwischen 0,5 mm und 10,0 mm, vorzugsweise zwischen 1,0 mm und 7,0 mm, weiter bevorzugt zwischen 1,2 mm und 5,0 mm, noch weiter bevorzugt zwischen 1,4 mm und 3,5 mm, und besonders bevorzugt zwischen 1,5 mm und 2,5 mm beträgt. Dieser Stellweg genügt in der Praxis für die meisten Korrekturen des Werkzeughalters in Querrichtung relativ zum Werkstück.

Erfindungsgemäß ist am Werkzeughalter ein Drehwerkzeug mit einer Schneide angeordnet.

Hierbei kann es sich zum Beispiel um eine Schneidplatte oder eine Wendeschneidplatte handeln. Die Schneide sollte insbesondere definiert ausgebildet sein. Die Schneide kann eine Krümmung, vorzugsweise in einer Schneidenebene, und einen Schneidenradius aufweisen. Die Krümmung dient dazu, dass nur ein Teil der Schneidenlänge in das Werkstück eintaucht und gewissermaßen eine konkave Nut in das Werkstück geschnitten wird. Der Schneidenradius soll die Schärfe der Schneide definieren.

In einer bevorzugten Ausgestaltung weist die Krümmung der Schneide des Drehwerkzeugs einen Radius zwischen 3,0 mm und 12,0 mm, vorzugsweise zwischen 3,5 mm und 10,0 mm, weiter bevorzugt zwischen 4,0 mm und 9,0 mm und besonders bevorzugt zwischen 5,0 mm und 8,0 mm auf. Vorteilhaft an derart großen Werkzeugradien ist, dass die zur Herstellung einer Planfläche notwendige Spirallänge kurz ist. So halbiert sich beispielsweise die Spirallänge bei der Herstellung einer Planfläche mit 70 mm Durchmesser, was der Bearbeitungsfläche von Linsenrohlingen für die Brillenglasherstellung nahekommt, von circa 72 m bei 2 mm Werkzeugradius auf circa 38 m bei einem Werkzeugradius von 8 mm. Entsprechend verkürzen sich Bearbeitungszeiten erheblich, auch ohne dass hierzu die Drehzahl des Werkstückes angehoben werden müsste. Mit derart großen Radien kann ein Werkstück also schnell und effizient bearbeitet werden. Durch den zweiten Linearantrieb können dabei Probleme bei der Herstellung von Höhenprofilen auf der Bearbeitungsfläche ausgeglichen werden, die große Werkzeugradien typischerweise mit sich bringen.

Bevorzugt beträgt der Schneidenradius der Schneide des Drehwerkzeugs zwischen 0,5 µm und 8,0 µm, vorzugsweise zwischen 1,0 µm und 7,0 µm, weiter bevorzugt zwischen 1,5 µm und 5,0 µm und besonders bevorzugt zwischen 2,0 µm und 3,0 µm. Diese Schneidenradien eignen sich insbesondere zur Bearbeitung von Materialien für optische Linsen wie Glas und Kunststoff.

Weiterhin sollte die Schneide des Drehwerkzeugs aus Naturdiamant, aus künstlichem Diamant oder aus Keramik bestehen, oder eine CVD-Diamantschicht (CVD = chemical vapour deposition) auf einem Trägersubstrat aufweisen. Hierdurch ist die Schneide langlebig und verändert Ihre Geometrie kaum über der Lebenszeit.

Typischerweise weist die Schneide eine Hauptschnittrichtung auf, in der die Schneide und das Werkstück zum Zerspanen relativ zueinander zu bewegen sind. Bevorzugt ist die Querrichtung quer zu dieser Hauptschnittrichtung ausgerichtet. Alternativ oder ergänzend überlagernd kann die Querrichtung jedoch auch gleichgerichtet zu der Hauptschnittrichtung ausgerichtet sein.

Die Erfindung betrifft außerdem eine Drehvorrichtung nach Anspruch 17.

Vorteilhaft hieran sind die neuartigen Möglichkeiten der Bewegungskinematik bei der Bearbeitung von Arbeitsflächen. Die Schneide kann nunmehr äußerst schnell oszillierend in der Querrichtung bewegt werden. Damit lassen sich auch Drehwerkzeuge mit größerem Krümmungsradius einsetzen, weil nunmehr Arbeitspfade auf der Werkstückoberfläche möglich sind, bei denen die Schneide besser um Positionen herummanövrierbar ist, sodass kein Materialabtrag an ungewollten Stellen erfolgt. Bei der Bearbeitung einer Stirnfläche eines rotierenden Werkstücks ist es hierdurch möglich, je nach Drehwinkelstellung nach links oder rechts vom eigentlichen Bearbeitungspfad abzuweichen. Dreht man die Schneide um 90 Grad besteht außerdem die Option die Schneide stotternd entlang des Bearbeitungspfades zu bewegen. Damit lässt sich die absolute Schneidgeschwindigkeit beispielsweise kurzeitig herabsetzen, um eine Positionsveränderung der Schneide in der Zustellrichtung umzusetzen.

Es lassen sich hierdurch steilere Anstiege im Höhenprofil umsetzen und beispielsweise eine anderenfalls zu langsame Änderung der Zustellung ausgleichen.

Der Werkstückhalter kann mit einem Werkstückspindelantrieb rotierend um eine virtuelle Rotationsachse angetrieben ausgebildet sein.

Das Werkstück kann eine optische Linse oder ein optischer Linsenrohling, und der Werkstückhalter zur Aufnahme einer optischen Linse oder eines optischen Linsenrohlings ausgebildet sein.

Die erfindungsgemäßen Relativbewegungen können bei der erfindungsgemäßen Drehvorrichtung alternativ oder zusätzlich auf Seiten des Werkstückhalters erzeugt werden. Aufgrund der geringeren Masseträgheit sollten vorzugsweise die sekundäre Querbewegung und die sekundäre Zustellbewegung vom Drehwerkzeug erfolgen. Vor allem die primäre Querbewegung und die primäre Zustellbewegung lässt sich optional durch Bewegen des Werkstückhalters oder des Drehwerkzeugs durchführen. In einer speziellen Ausgestaltung ist vorgesehen, dass eine Werkzeugantriebseinheit wie zuvor und nachstehend beschrieben zumindest die sekundäre Querbewegung und die sekundäre Zustellbewegung durchführt.

Erfindungsgemäß ist vorgesehen, dass die Drehvorrichtung eine Werkzeugantriebseinheit wie sie vor- und nachstehend beschrieben ist aufweist, wobei das Drehwerkzeug mit der Schneide in dem Werkzeughalter aufgenommen ist, wobei der erste Linearmotor eine sekundäre Zustellbewegung in der Zustellrichtung bewirkt, die (zumindest im Wesentlichen oder exakt) gleichgerichtet zu derjenigen des Hauptzustellantriebs ist, wobei das Drehwerkzeug und der Werkstückhalter durch die Überlagerung aus primären und sekundären Zustellbewegungen aufeinander zu und voneinander weg bewegbar sind, und wobei der zweite Linearmotor den sekundären Querantrieb ausbildet. Die Vorteile entsprechen jeweils denjenigen, die zu den optionalen Ausgestaltungsmöglichkeiten der Werkzeugantriebseinheit beschrieben sind.

Erfindungsgemäß weist die Drehvorrichtung eine Werkzeugantriebseinheit auf, bei der der Werkzeughalter, der erste Linearmotor und der zweite Linearmotor eine Baugruppe ausbilden oder Teil hiervon sind, wobei die Baugruppe auf einem Kreuzschlitten angeordnet ist, und wobei der Kreuzschlitten zum Hauptzustellantrieb und Hauptquerantrieb gehört und als Bewegungsachsen die primäre Zustellbewegung und primäre Querbewegung ermöglicht.

Grundsätzlich bestehen optionale Ausgestaltungsvarianten der Drehvorrichtung auch in den optionalen Ausgestaltungsvarianten der Werkzeugantriebseinheit. Dies bedeutet, dass die Drehvorrichtung optional mit einem oder mehreren der folgenden Merkmale ausgestattet sein kann, wobei auf die jeweils zuvor beschriebenen Vorteilsangaben verwiesen wird:
- dass der erste Linearmotor gemeinsam mit dem Werkzeughalter in der Querrichtung pendelnd oder verschiebbar mit dem zweiten Linearmotor angetrieben ist;
- dass der erste Linearmotor und der Werkzeughalter auf einem Schlitten angeordnet sind, auf dem sie mittels dem zweiten Linearmotor verschiebbar gelagert sind;
- dass der Werkzeughalter starr mit dem ersten Linearmotor verbunden ist;
- dass der Werkzeughalter starr mit dem zweiten Linearmotor verbunden ist;
- dass der erste Linearmotor und der zweite Linearmotor relativ zueinander fixiert befestigt sind;
- dass der Werkzeughalter schwimmend oder pendelnd mit dem ersten Linearmotor verbunden ist;
- dass der Werkzeughalter schwimmend oder pendelnd mit dem zweiten Linearmotor verbunden ist;
- dass der Werkzeughalter mit einem dritten Linearmotor aufweisend eine dritte Schwingspule oder ein drittes Piezoelement in einer zweiten Querrichtung quer zu der Zustellrichtung und quer zur ersten Querrichtung pendelnd oder verschiebbar angetrieben ist;
- dass der Kreuzschlitten einen Kreuzschlittenantrieb aufweist, mit dem die Baugruppe linearverschiebbar entlang der Zustellrichtung und linearverschiebbar entlang der Querrichtung angetrieben ist;
- dass die freien Stellwege des Kreuzschlittens, insbesondere die primären Zustellbewegungen und primären Querbewegungen, wenigstens um das zehnfache größer sind als die freien Stellwege des ersten und zweiten Linearmotors bzw. der sekundären Zustellbewegung und sekundären Querbewegung;
- dass der freie Stellwege des ersten Linearmotors entlang der Zustellrichtung wenigstens fünfmal, vorzugsweise wenigstens achtmal, und besonders bevorzugt wenigstens zehnmal so groß ist wie der freie Stellwege des zweiten Linearmotors in der Querrichtung;
- dass der freie Stellwege des ersten Linearmotors entlang der Zustellrichtung zwischen 5 mm und 60 mm, vorzugsweise zwischen 10 mm und 50 mm, weiter bevorzugt zwischen 15 mm und 40 mm, noch weiter bevorzugt zwischen 18 mm und 35 mm, und besonders bevorzugt zwischen 20 mm und 30 mm beträgt;
- dass der freie Stellwege des zweiten Linearmotors in der Querrichtung zwischen 0,5 mm und 10,0 mm, vorzugsweise zwischen 1,0 mm und 7,0 mm, weiter bevorzugt zwischen 1,2 mm und 5,0 mm, noch weiter bevorzugt zwischen 1,4 mm und 3,5 mm, und besonders bevorzugt zwischen 1,5 mm und 2,5 mm beträgt;
- Dass die Schneide definiert ausgebildet ist;
- dass die Schneide eine Krümmung, vorzugsweise in einer Schneidenebene, und einen Schneidenradius aufweist;
- dass die Krümmung der Schneide des Drehwerkzeugs einen Radius zwischen 3,0 mm und 12,0 mm, vorzugsweise zwischen 3,5 mm und 10,0 mm, weiter bevorzugt zwischen 4,0 mm und 9,0 mm und besonders bevorzugt zwischen 5,0 mm und 8,0 mm aufweist;
- dass der Schneidenradius der Schneide des Drehwerkzeugs zwischen 0,5 µm und 8,0 µm, vorzugsweise zwischen 1,0 µm und 7,0 µm, weiter bevorzugt zwischen 1,5 µm und 5,0 µm und besonders bevorzugt zwischen 2,0 µm und 3,0 µm beträgt;
- dass die Schneide des Drehwerkzeugs aus Naturdiamant, aus künstlichem Diamant oder aus Keramik besteht, oder eine CVD-Diamantschicht (CVD = chemical vapour deposition) auf einem Trägersubstrat aufweist;
- dass die Schneide (21) eine Hauptschnittrichtung (H) aufweist, in der die Schneide (21) und das Werkstück (100) zum Zerspanen relativ zueinander zu bewegen sind, und
- weitere der genannten optionalen Ausgestaltungen der Werkzeugantriebseinheit.

Fernerhin betrifft die Erfindung ein Verfahren zur spanenden Bearbeitung einer Stirnfläche eines um eine virtuelle Rotationsachse angetriebenen Werkstücks mit einem Drehwerkzeug aufweisend eine Schneide, gemäß Anspruch 1.

Vorteilhaft hieran ist, dass die primäre Querbewegung von einem ersten Antrieb durchführbar ist, der auf eher langsame und weite Verstellwege ausgelegt ist, wohingegen die sekundäre Querbewegung mit einem Antrieb umsetzbar ist, der auf kurze, schnelle und richtungswechselnde Verstellwege ausgelegt ist. Damit lässt sich die Position der Schneide entlang des Bearbeitungspfades gemäß der primären Querbewegung gezielt lokal mit der sekundären Querbewegung ändern. Das erlaubt beispielsweise Schneiden mit großem Radius um lokal zu erzeugende Erhebungen auf der Bearbeitungsfläche herum zu manövrieren. Man verhindert so, dass solche Erhebungen unbeabsichtigt egalisiert werden. Das gelingt selbst im Bereich um die Rotationsachse, weil man in der Lage ist zu bestimmen, in welchem Drehwinkel die Schneide näher an die Rotationsachse herangefahren wird und in welchen nicht. Dabei sollten die primäre Querbewegung und die sekundäre Querbewegung von unterschiedlichen Antrieben bewirkt sein.

Das Verfahren kann insbesondere unter Einsatz einer wie vor- und nachstehend beschriebenen Werkzeugantriebseinheit oder Drehvorrichtung durchgeführt werden, mit den jeweiligen optionalen Ausgestaltungsoptionen.

Besonders geeignet ist das Verfahren, wenn das Werkstück eine optische Linse oder ein optischer Linsenrohling mit einer gekrümmten Stirnfläche ist. Mit dem Verfahren lässt sich eine Bearbeitungsfläche herstellen, die eine Tangentiale aufweist, die im Bereich der Rotationsachse nicht orthogonal zur Rotationsachse ist. Dem kommt vor allem bei der Herstellung von Brillengläsern eine hohe Bedeutung zu, weil hier Rezeptflächen sowie Prismenwinkel herzustellen sind. In guter Annäherung lässt sich die Fläche um die Rotationsachse oftmals als prismatische Fläche betrachten, also als eine schiefe Ebene bezogen auf die Rotationsachse.

Erfindungsgemäß ist vorgesehen, dass die sekundäre Querbewegung der Schneide exakt einen Hub bestehend aus einer Vorwärts- und einer Rückwärtsbewegung pro Umdrehung des Werkstücks aufweist. Damit lässt sich gewissermaßen bei jeder Umdrehung eine Delle im primären Bewegungspfad erzeugen, und/oder der Spiralpfad relativ zur Rotationsachse seitlich versetzen, und/oder die Spiralform elliptisch verschlanken.

Erfindungsgemäß ist vorgesehen, dass die sekundäre Querbewegung einen Hub, d.h. im Besonderen exakt eine vorwärts und exakt eine rückwärts gerichtete sekundäre Querbewegung, pro Umdrehung des Werkstücks umfasst, sodass in einer bestimmten Drehwinkelstellung des Werkstücks vom spiralförmigen Arbeitspfad der primären Querbewegung abgewichen wird. Hierdurch lässt sich insbesondere gewissermaßen ein herzförmiger Arbeitspfad aus dem spiralförmigen Arbeitspfad erzeugen. Dabei kann die Herzspitze des herzförmigen Arbeitspfads dazu dienen, die Schneide kurzzeitig bis zur Rotationachse zu bewegen.

Dabei besteht die Verfahrensoption, dass der spiralförmige Arbeitspfad ein Höhenprofil mit wenigstens einem Scheitel und einem Tal aufweist, wobei die größte Annäherung des Hubs an die Rotationsachse in dem Drehwinkel erfolgt, in dem die Rotationsachse zwischen der Schneide und dem Tal liegt. Damit macht man sich zu Nutze, dass die Schneide bei der Annäherung an die Rotationsachse nicht mit der Oberfläche auf der Rückseite der Rotationsachse in Kontakt tritt, weil dort im Moment des Hubes das Tal positioniert ist. Man kann also gewissermaßen mit der Schneide soweit fahren, dass sie in das Tal ragt, ohne dort die Stirnfläche des Werkstücks zu beschädigen. Damit ist eine Kinematik umsetzbar, mit der selbst mit größeren Werkzeugradien eine prismatische Bearbeitung gelingt, sodass die Messwerte für Sphäre und Zylinder im Bearbeitungszentrum, d.h. im Bereich der Rotationsachse, innerhalb geforderter Toleranzen liegen.

Aus den gleichen Gründen, ist in einer speziellen Verfahrensvariante vorgesehen, dass die Schneide bei der größten Annäherung des Hubs an die Rotationsachse bis über die Rotationsachse hinaus sowie bis in das Tal bewegt wird. Im Speziellen sollte hierbei vorgesehen sein, dass die Schneide bei der größten Annäherung des Hubs an die Rotationsachse im Bereich des Tals über der Stirnfläche schwebt und auf der gegenüberliegenden Seite vom Tal mit der Stirnfläche in Eingriff steht. Durch das Schweben wird die Stirnfläche im Bereich des Tals schadenfrei gehalten.

Optional kann für die Bearbeitung von einer Stirnfläche, die prismatisch und U-förmig im Zentrum um die Rotationsachse ist, auch vorgesehen sein, dass entsprechend der zwei Täler und zwei Scheitel pro Umdrehung auch zwei Hübe der sekundären Querbewegung durchgeführt werden. Entsprechend gilt dies bei noch komplexeren Ausgestaltungen mit mehr Scheiteln und Tälern pro Umdrehung, wobei dies eher theoretischer Natur ist. In den meisten Fällen lässt sich die Tangente im Bereich der Rotationsachse als prismatische Fläche betrachten.

Gemäß einer speziellen Verfahrensumsetzung wird mit der Überlagerung der primären Querbewegung durch die sekundäre Querbewegung entlang des spiralförmigen Arbeitspfad wenigstens eine Delle oder herzartige Einkerbung des Arbeitspfades in Richtung der Rotationsachse erzeugt. Damit fährt man die Schneide also in definierten Drehwinkeln mehr an die Rotationsachse heran als in anderen.

Vorzugsweise ist die primäre Querbewegung ausschließlich eine Vorwärtsbewegung. Entsprechend kann hierfür ein verhältnismäßig preiswerter Antrieb eingesetzt werden, der außerdem große Stellwege umsetzen kann.

Es bietet sich eine Verfahrensausführung an, bei der die primäre Querbewegung ein kontinuierliches Geschwindigkeitsprofil aufweist, bspw. eine konstante Geschwindigkeit. Auch ein solches lässt sich mit einem verhältnismäßig preiswerten Antrieb umsetzen, der für große Stellwege geeignet ist.

Eine besondere Verfahrensvariante besteht darin, dass keine sekundäre Querbewegung außerhalb eines Grenzabstands der Schneide von der Rotationsachse durchgeführt wird und die sekundäre Querbewegung erst ab dem Grenzabstand erfolgt. Damit erfolgt die Bearbeitung weiter außen klassisch, während im Zentrum die Besonderheiten der Schneidenannäherung an die Rotationsachse berücksichtigt werden können.

Insbesondere zeigte sich in Versuchen, dass der Grenzabstand kleiner als 2,00 mm, vorzugsweise kleiner als 1,20 mm, weiter bevorzugt kleiner als 0,70 mm, noch weiter bevorzugt kleiner als 0,50 mm, und besonders bevorzugt kleiner als 0,35 mm sein sollte. In diesem Bereich tritt nämlich das Phänomen auf, dass die Schneide, sobald sie etwas über die Rotationsachse hinaussteht mit Ihrer Rückseite mit der Stirnfläche in Kontakt tritt und so beschädigt. Je größer die Krümmung der Schneide ist, desto größer sollte auch der Grenzabstand gewählt werden.

Je nachdem, wie die Bearbeitung insbesondere im äußeren Bereich der Stirnfläche aussehen soll, kann der spiralförmige Arbeitspfad aus der Gruppe archimedische Spirale, logarithmische Spirale oder hyperbolische Spirale sein. Eine archimedische Spirale wird man am ehesten einsetzen, um die gesamte Stirnfläche drehend zu bearbeiten. Eine hyperbolische Spirale ist insbesondere für eine Nachbearbeitung des Bereichs der Stirnfläche um die Rotationsachse geeignet. Man nähert sich der Rotationsachse hiermit relativ schnell. Bei logarithmischen Spiralen erfolgt die Annäherung an die Rotationsachse besonders langsam. Optional bietet es sich daher an, eine archimedische oder hyperbolische Spirale im äußeren Bereich zu nutzen und ab Erreichen eines Grenzabstands von der Rotationsachse in eine logarithmische Spirale überzugehen.

Das Werkstück kann beispielsweise eine optische Linse oder ein optischer Linsenrohling sein. In einer Verfahrensergänzung ist vorgesehen, dass das Werkstück ein Rohling für die Brillenglasfertigung ist, und aus der Stirnfläche basierend auf einem Rezept durch das Drehen eine Freiformfläche hergestellt wird, mit der ein Sehfehler des Rezeptinhabers korrigiert wird.

Zusätzlich kann vorgesehen sein, dass nach Abschluss der Bearbeitung der Stirnfläche eine Anpassung des Umfangs des Werkstückes an ein Brillengestell erfolgt. Damit lässt sich das Werkstück in die Fassung des gewünschten Brillengestells montieren.

Fernerhin betrifft die Erfindung eine Verwendung gemäß Anspruch 10.

Durch die Verwendung lässt sich eine schnelle effiziente Drehbearbeitung von Stirnflächen erzielen, die selbst im Bereich der Rotationsachse sehr präzise ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht einer Werkzeugantriebseinheit;
- Fig. 2: eine abweichende perspektivische Ansicht der Werkzeugantriebseinheit nach Fig. 1;
- Fig. 3: einen horizontalen Schnitt durch die Werkzeugantriebseinheit nach Fig. 1;
- Fig. 4: eine perspektivische Ansicht einer Drehvorrichtung mit einer Werkzeugantriebseinheit nach dem Typ der Fig. 1;
- Fig. 5: einen horizontalen Schnitt durch die Drehvorrichtung nach Fig. 4;
- Fig. 6: eine Schemaskizze eines Drehwerkzeugs im Eingriff mit einer prismatischen Stirnfläche eines Werkstücks;
- Fig. 7: eine zweite Schemaskizze eines Drehwerkzeugs im Eingriff mit einer prismatischen Stirnfläche eines Werkstücks;
- Fig. 8: eine dritte Schemaskizze eines Drehwerkzeugs im Eingriff mit einer prismatischen Stirnfläche eines Werkstücks; und
- Fig. 9: ein Phasendiagramm mit Zustellbewegungen und Querbewegungen.

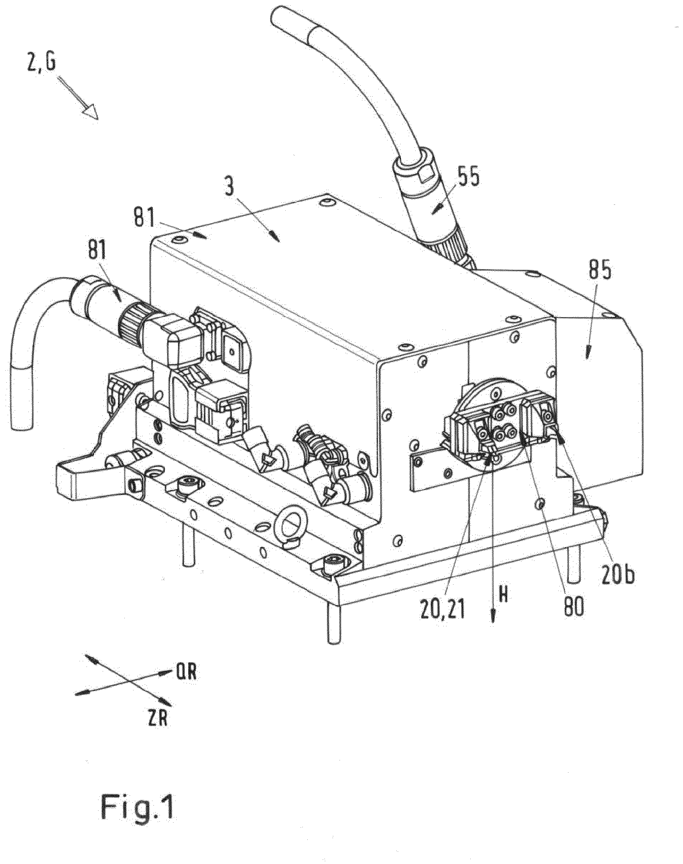

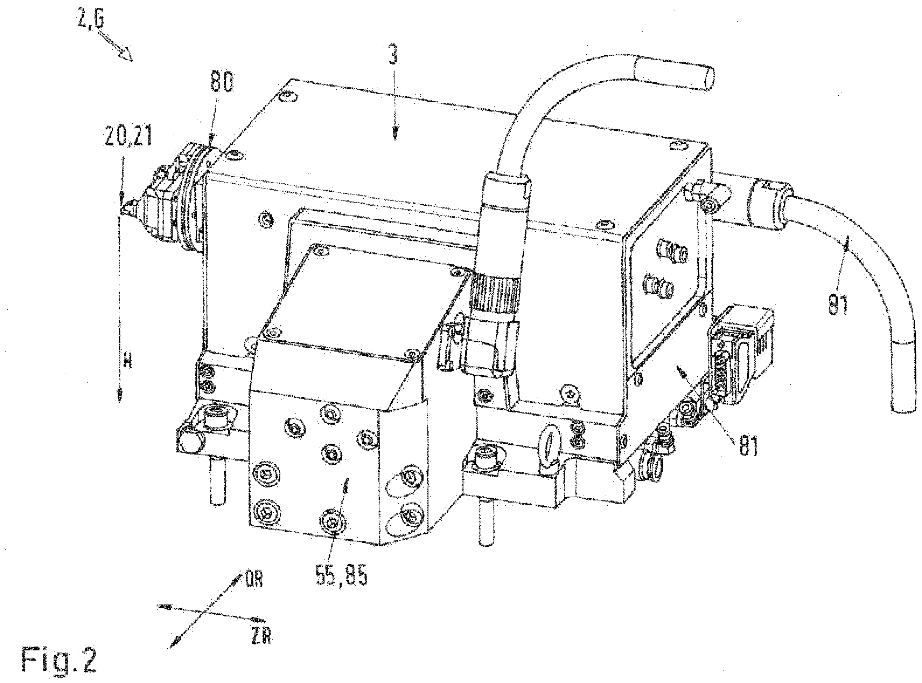

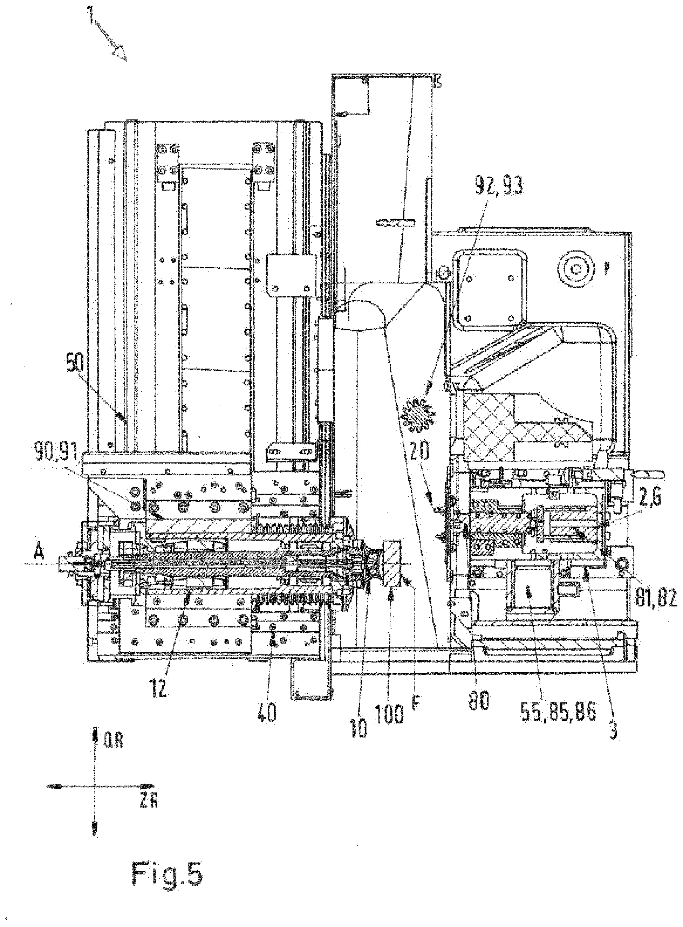

Fig. 1 zeigt eine perspektivische Ansicht einer Werkzeugantriebseinheit 2 für eine Drehvorrichtung zur spanenden Bearbeitung von Werkstücken (siehe Fig. 5), die als Baugruppe G ausgeführt ist. Diese Baugruppe G ist in **Fig. 2** aus eine abweichende Perspektive dargestellt. Gleiche Bezugszeichen betreffen also gleiche Bauteile, weswegen die **Fig. 1** **und** **2** zusammen beschrieben werden. Die Baugruppe G hat ein gemeinsames Gehäuse 3. Auf einer Seite des Gehäuses 3 ragt ein Werkzeughalter 80 heraus, in dem ein Drehwerkzeug 20 mit einer definierten Schneide 21 und zusätzlich benachbart ein zweites Drehwerkzeug 20b aufgenommen ist. Die Schneide 21 kann beispielsweise aus Naturdiamant, aus künstlichem Diamant oder aus Keramik bestehen, oder eine CVD-Diamantschicht (CVD = chemical vapour deposition) auf einem Trägersubstrat aufweisen. Die Schneide 21 weist eine Hauptschnittrichtung H auf, in der die Schneide 21 und das Werkstück 100 zum Zerspanen relativ zueinander zu bewegen sind. Verwendung findet bei dem Einsatz der Werkzeugantriebseinheit 2 zur Bearbeitung eines Linsenrohlings bei der Brillenglasfertigung vorzugsweise eine Schneide 21 mit einer Krümmung in einer Schneidenebene, und mit einem Schneidenradius der folgenden Dimensionierung. Die Krümmung der Schneide sollte einen Radius zwischen 3,0 mm und 12,0 mm aufweisen. Der Schneidenradius der Schneide 21 sollte zwischen 0,5 µm und 8,0 µm betragen.

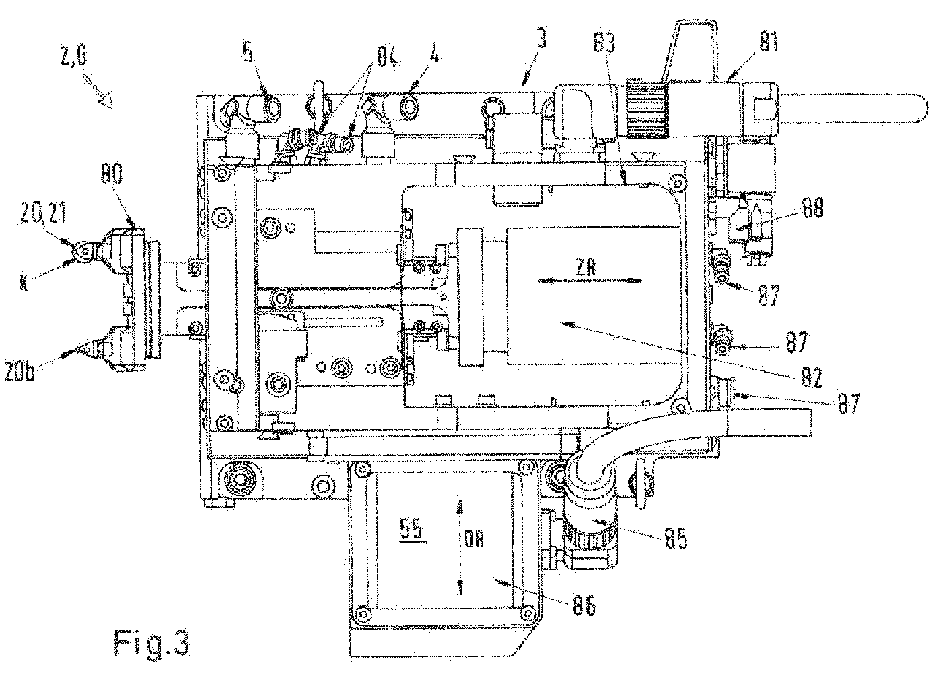

Der Werkzeughalter 80 ist mit einem ersten Linearmotor 81 verschiebbar entlang einer Zustellrichtung ZR angetrieben. Im Schnitt nach **Fig. 3** erkennt man, dass der erste Linearmotor 81 eine erste Schwingspule 82 aufweist. Alternativ könnte auch ein erstes Piezoelement vorgesehen sein. Zusätzlich ist der Werkzeughalter 80 mit einem zweiten Linearmotor 85 in einer Querrichtung QR quer zu der Zustellrichtung ZR pendelnd oder verschiebbar angetrieben. Insbesondere ist die Querrichtung QR auch quer zur Hauptschnittrichtung H ausgerichtet. Der zweite Linearmotor 85 weist wie man im Schnitt der **Fig. 3** sieht, eine zweite Schwingspule 86 auf. Alternativ kann hier ein zweites Piezoelement eingesetzt werden. Der zweite Linearmotor 85 bildet so einen sekundären Querantrieb 55 für einen Drehprozess aus.

Wie man in **Fig. 3** weiterhin zu erkennen vermag, ist der erste Linearmotor 81 gemeinsam mit dem Werkzeughalter 80 in der Querrichtung QR verschiebbar mit dem zweiten Linearmotor 85 angetrieben. Hierzu sitzen der erste Linearmotor 81 und der Werkzeughalter 80 auf einem Schlitten 83, auf dem sie mittels dem zweiten Linearmotor 85 verschiebbar gelagert sind. Der Werkzeughalter 80 ist starr mit dem ersten Linearmotor 81 und mittelbar über den Schlitten 83 auch starr mit dem zweiten Linearmotor 85 verbunden.

Des Weiteren erkennt man in Fig. 3 verschiedene Anschlüsse für Fluidleitungen. So ist eine Kühlmittelzuleitung 4 und eine Kühlmittelableitung 5 zur Kühlung der Baugruppe G vorgesehen. Mittels Schlittenschmiermittelleitungen 84 wird der Schlitten 83 geschmiert. Schmiermittelleitungen 87 dienen der Schmierung der Lagerung der sekundären Zustellbewegung in Zustellrichtung ZR. Schließlich ist noch ein Druckluftanschluss 88 vorgesehen, mit dem das Gehäuse 3 mit druck beaufschlagt wird, sodass keinerlei Verschmutzungen durch etwaige Dichtungen in das Innere des Gehäuses 3 gelangen.

Eine solche Baugruppe G wie in den Fig. 1, 2 und 3 gezeigt kann beispielsweise auf einem Kreuzschlitten einer Drehvorrichtung angeordnet werden. Ein solcher Kreuzschlitten weist dann einen Kreuzschlittenantrieb auf, mit dem die Baugruppe G linearverschiebbar entlang der Zustellrichtung ZR und linearverschiebbar entlang der Querrichtung QR angetrieben ist.

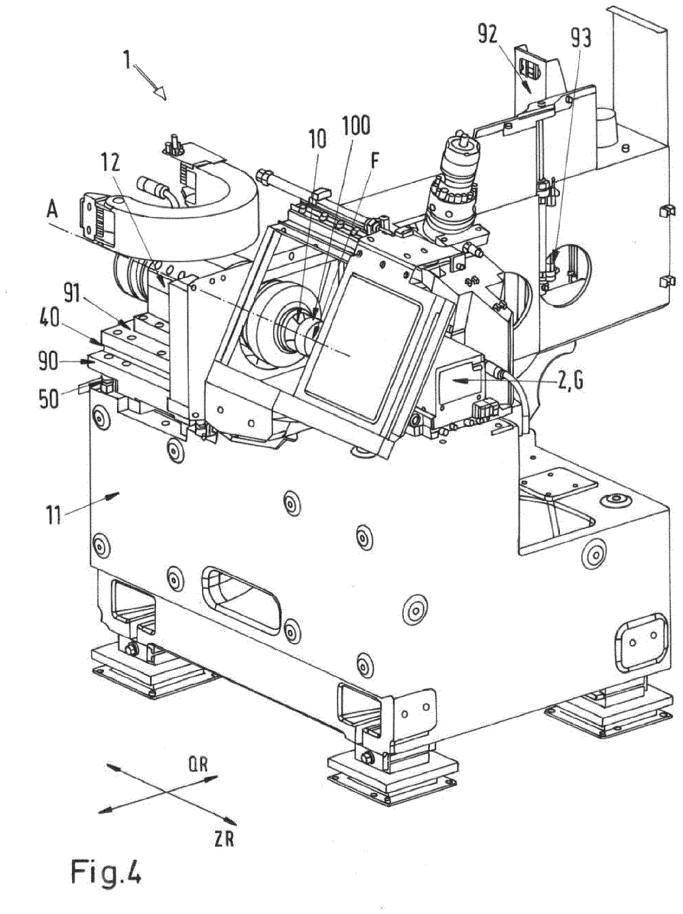

Abweichend zu einer solchen optionalen Verwendung ist der Kreuzschlitten 90 gemäß der Drehvorrichtung 1 nach den **Fig. 4** **und** **5** allerdings werkstückseitig angeordnet und die Baugruppe G ortsfest mit dem Maschinengestell bzw. -bett 11 verbunden. Der Kreuzschlitten 90 sitzt der Baugruppe G gegenüberliegend ebenfalls auf dem Maschinenbett 11 und trägt den Werkstückhalter 10, der zur Aufnahme des Werkstücks 100 ausgebildet und um eine virtuelle Rotationsachse A rotierend angetrieben ist. Hierzu ist der Werkstückhalter 10 mit einem Werkstückspindelantrieb 12 rotierend angetrieben. Das Werkstück 100 ist ein optischer Linsenrohling mit einer gekrümmten und prismatischen Stirnfläche F zur Herstellung eines Brillenglases.

Der Kreuzschlitten 90 bildet zum einen Hauptzustellantrieb 40 aus, der eine primäre Zustellbewegung in der Zustellrichtung ZR bewirkt, wobei das Drehwerkzeug 20 und der Werkstückhalter 10 bzw. die Schneide 21 und die Stirnfläche F des Werkstücks 100 durch die Zustellbewegung aufeinander zu und voneinander weg bewegbar sind, dies vorliegend gleichgerichtet wie die Rotationsachse A.

Zum anderen bildet der Kreuzschlitten 90 einen Hauptquerantrieb 50 aus, der eine primäre Querbewegung in einer Querrichtung QR quer zur Zustellrichtung ZR bewirkt, wobei das Drehwerkzeug 20 bzw. dessen Schneide 21 und die Rotationsachse A durch die primäre Querbewegung aufeinander zu und voneinander weg bewegbar sind, dies vorliegend quergerichtet zu der Rotationsachse A.

Mittels der gegenüberliegend angeordneten Werkzeugantriebseinheit 2, insbesondere dem ersten Linearmotor 81, wird eine sekundäre Zustellbewegung in der Zustellrichtung ZR bewirkt, die gleichgerichtet zu derjenigen des Hauptzustellantriebs 40 ist. Hierdurch sind das Drehwerkzeug 20 und der Werkstückhalter 10 durch die Überlagerung aus primären und sekundären Zustellbewegungen aufeinander zu und voneinander weg bewegbar angetrieben.

Der zweite Linearmotor 85 der Werkzeugantriebseinheit 2 bildet einen sekundären Querantrieb 55 aus, dessen sekundäre Querbewegungen gleichgerichtet zu denjenigen des Hauptquerantriebs 50 sind. Damit sind das Drehwerkzeug 20 bzw. dessen Schneide 21 und die Rotationsachse A durch die Überlagerung aus primären und sekundären Querbewegungen aufeinander zu und voneinander weg bewegbar angetrieben.

Die freien Stellwege des Kreuzschlittens 90 sind wenigstens um das zehnfache größer als die freien Stellwege des ersten und zweiten Linearmotors 81, 85. Außerdem sind die freien Stellwege des ersten Linearmotors 81 entlang der Zustellrichtung ZR wenigstens fünfmal so groß wie der freie Stellwege des zweiten Linearmotors 85 in der Querrichtung QR. In absoluten Werten beträgt der freie Stellwege des ersten Linearmotors 81 bei der Brillenglasfertigung aus Linsenrohlingen entlang der Zustellrichtung ZR vorzugsweise zwischen 5 mm und 60 mm. Demgegenüber sollte der freie Stellwege des zweiten Linearmotors 81 in der Querrichtung QR nur zwischen 0,5 mm und 10,0 mm betragen.

Benachbart zur Werkzeugantriebseinheit 2 ist in den Fig. 4 und 5 noch ein Fräskopf 93 einer optionalen Frässtation 92 im Arbeitsraum erkennbar. Das Werkstück 100 kann mit dem Werkstückhalter 10 und dem Kreuzschlitten 90 auch bei der Frässtation 92 zur Fräsbearbeitung positioniert werden.

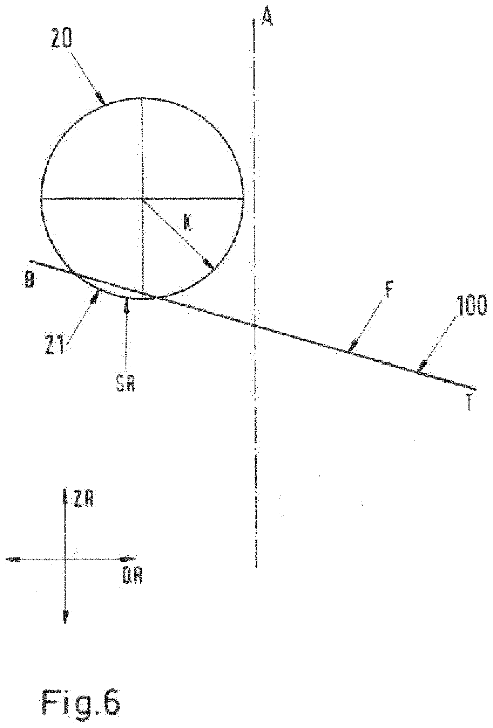

Mit einer solchen Drehvorrichtung 1 lässt sich nunmehr ein Verfahren zur spanenden Bearbeitung der Stirnfläche F des um die virtuelle Rotationsachse A angetriebenen Werkstücks 100 mit dem Drehwerkzeug 20 bzw. dessen Schneide 21 durchführen. Bei diesem wird, während das Werkstück 100 um die virtuelle Rotationsachse A rotiert wird, die Schneide 21 mit der Stirnfläche F des Werkstückes 100 beabstandet von der Rotationsachse A in Eingriff gebracht. Bereits vorher oder ab dem Eingriff wird eine primäre Querbewegung der Schneide 21 auf die Rotationsachse A zu durchgeführt, während die Schneide 21 weiterhin in die Stirnfläche F des rotierenden Werkstückes 100 eingreift, sodass die Schneide 21 durch die Überlagerung der Rotation des Werkstücks 100 und der Querbewegung der Schneide 21 entlang eines spiralförmigen Arbeitspfades über die Stirnfläche F geführt wird. Eine solche Eingriffssituation ist schematisch in **Fig. 6** dargestellt, wobei man erkennt, dass die zu bearbeitende Stirnfläche F des Werkstückes 100 schräg, also prismatisch, bezogen auf die virtuelle Rotationsachse A ist. Beispielsweise kann das Werkstück 100 bereits in der Frässtation 92 derart schräg vorbearbeitet sein. Der spiralförmige Arbeitspfad hat hierdurch ein Höhenprofil mit einem Scheitel B und einem Tal T, wobei der Hub hin zur Rotationsachse A der sekundären Querbewegung in dem Drehwinkel erfolgt, in dem die Rotationsachse A zwischen der Schneide 21 und dem Tal T liegt.

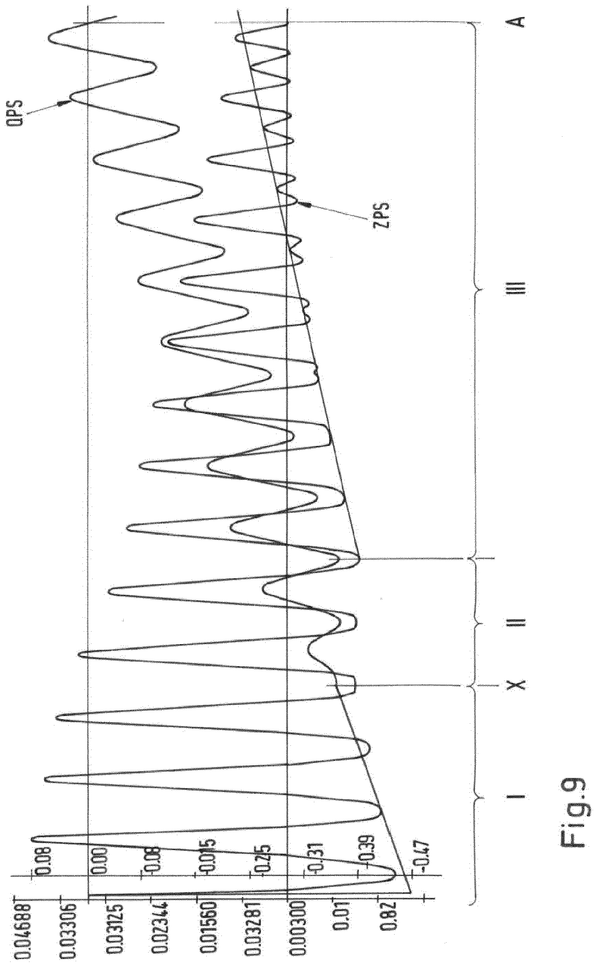

Die schräge Stirnfläche F macht es insbesondere erforderlich, bei jeder Umdrehung des Werkstückes 100 die Position der Schneide 21 in der Zustellrichtung ZR vor und zurück zu bewegen, wie es im Phasendiagramm nach **Fig. 9** erkennbar ist. Jeder Peak des hier kumuliert aus primären und sekundären Zustellbewegungen dargestellten Verlaufs ZPS stellt eine 360 Grad Umdrehung des Werkstücks dar. Je näher sich die Schneide 21 an die Rotationsachse A annähert, desto kleiner werden die Zustellbewegungen ZPS, weil die Höhenlage von Scheitel B und Tal T der Stirnfläche F nicht mehr soweit auseinanderfallen. Fig. 6 stellt insbesondere noch einen Abstand der Scheide 21 zur Rotationsachse A dar, bei dem keinerlei Gefahr eines in Kontakttretens der Schneidenrückseite mit der Stirnfläche F besteht. Dies entspricht im Phasendiagramm der Fig. 9 dem Abschnitt I. Hier wird die Schneide 21 allein durch die primäre Querbewegung auf die Rotationsachse A zu bewegt, wobei die primäre Querbewegung ausschließlich eine Vorwärtsbewegung mit einem kontinuierlichen, hier insbesondere einem linearen Geschwindigkeitsprofil ist.

Zusätzlich kann verfahrensgemäß ein Überlagern der primären Querbewegung mit einer gleichgerichteten sekundären Querbewegung der Schneide 21 erfolgen, die auf die Rotationsachse A zu und von der Rotationsachse A weg erfolgt, wobei die sekundäre Querbewegung 21 in Abhängigkeit von der Drehwinkelstellung des Werkstücks 100 durchgeführt wird. Die primäre Querbewegung, die in Phase I in Fig. 9 noch linear verläuft, wird dann in den Phasen II und III deutlich von der sekundären Querbewegung überlagert. Es wird also keine sekundäre Querbewegung außerhalb eines Grenzabstands X der Schneide 21 von der Rotationsachse A durchgeführt und die sekundäre Querbewegung erfolgt erst ab dem Grenzabstand X. Bei einer Brillenglasherstellung mit einer Schneidenkrümmung K mit 8 mm Radius bietet es sich an, den Grenzabstand X bei circa 0,35 mm festzulegen.

Die sekundäre Querbewegung läuft in Phase II langsam an und entfaltet sich anschließend in Phase III. Daraus resultiert dann die kumulierte Querbewegungskurve QPS aus primären und sekundären Querbewegungen. Erkennbar sind die Peaks der kumulierte Querbewegungskurve QPS aufgrund der sekundären Querbewegung phasengleich zu den Peaks der kumulierten Zustellbewegungen. Dies ist bei der prismatischen Stirnfläche F dadurch begründet, dass pro Umdrehung des Werkstücks 100 genau eine größere Annäherung der Schneide 21 an die Rotationsachse A heran und eine Wiederentfernung von der Rotationsachse A weg erforderlich sind, um mit der Schneide 21 nicht den Bereich auf der der Rotationsachse A gegenüberliegenden Seite der Stirnfläche F zu beschädigen.

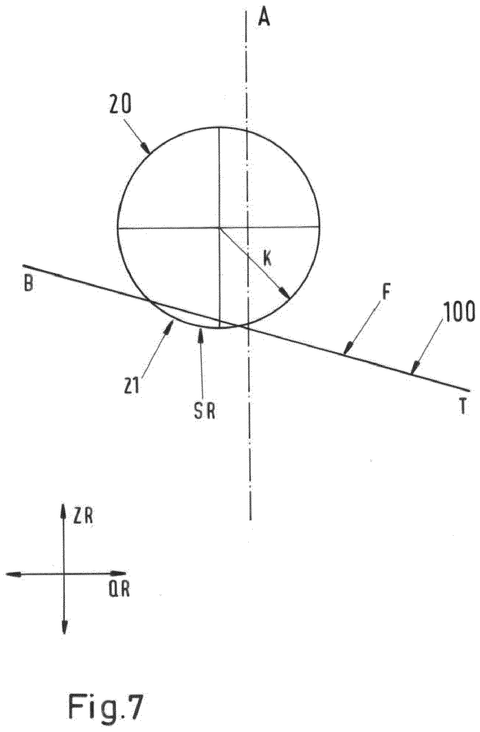

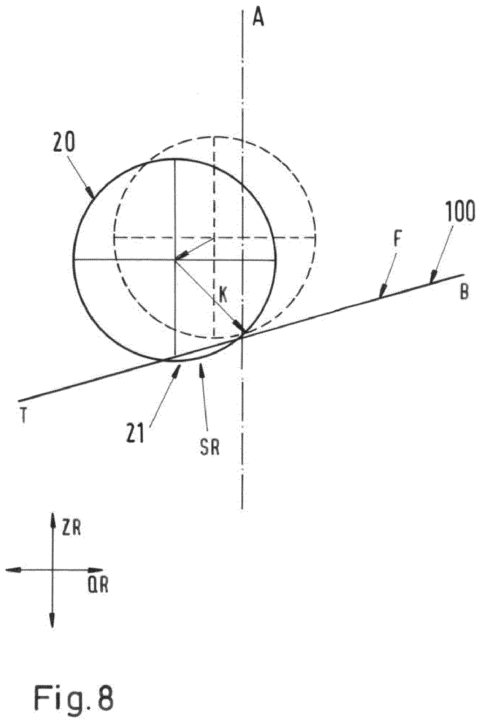

Hierzu wird in der Schemaskizze nach Fig. 7 deutlich, dass die hier gezeigte Annäherung der Schneide 21 an die Rotationsachse A unkritisch erscheint, weil die Schneide 21 deutlich über der Talseite T schwebt. Dreht man das Werkstück 100 jedoch um 180 Grad um die Rotationsachse und möchte die Eindringtiefe der Schneide in der Stirnfläche F mittels einer Positionsänderung in Zustellrichtung ZR beibehalten, würde dies unweigerlich zu einem Kontakt der Schneide mit der Bergseite B führen. Deshalb ist wie man in **Fig. 8** gut erkennen kann, die Schneide 21 wieder ein Stück in Querrichtung QR von der Rotationsachse A wegzuziehen. Damit der letzte verbleibende Bereich um die Rotationsachse A auch noch abgedreht werden kann, ist es zum Abschluss notwendig, die Eindringtiefe der Schneide 21 in die Stirnfläche F zu reduzieren, wobei letztlich bei jeder Eindringtiefe das erfindungsgemäße Zurückziehen der Schneide 21 in Querrichtung beibehalten wird, um keine Schäden der Stirnfläche F auf Seiten der Bergseite B zu bewirken und sich trotzdem maximal an die Rotationsachse A annähern zu können. Diesbezüglich wird aus der Kurve ZPS der Fig. 9 deutlich, dass die kumulierte Zustellbewegung nicht nur immer kleiner wird, sondern am Ende der Phase III pro Umdrehung einmal auf den Wert null reduziert wird. Damit erfolgt die Materialabnahme nur noch benachbart zu dieser Drehwinkelposition des Werkstücks 100, wobei der maximale Materialabtrag auf Seiten der Bergseite B erfolgt. Schließlich wird im Schnittpunkt der horizontal gekennzeichneten Nullpunktlinie und der Rotationsachse A der Wert null erreicht.

Würde man die Auswirkung der sekundären Querbewegungen anhand der Veränderung einer durch die primären Querbewegung bedingten archimedischen Spirale betrachten, würde man erkennen, dass insbesondere immer auf der Bergseite B eine Annäherung an die Rotationsachse A erfolgt und auf der gegenüberliegenden Talseite T ein Entfernen von der Rotationsachse A. Es resultiert dann eine Deformation bzw. de-konzentrische Positionierung der eigentlichen archimedischen Spirale, bspw. eine Delle oder herzartige Einkerbung des Arbeitspfades in Richtung der Rotationsachse A oder auch eine Verschiebung des Mittelpunktes des Arbeitspfades im Verhältnis zur Rotationsachse A. Das hängt insbesondere auch davon ab, wie schnell die sekundären Querbewegungen durchgeführt werden.

### Bezugszeichenliste

- 1: Drehvorrichtung
- 2: Werkzeugantriebseinheit
- 3: Gehäuse
- 4: Kühlmittelzuleitung
- 5: Kühlmittelableitung

- 10: Werkstückhalter
- 11: Maschinenbett
- 12: Werkstückspindelantrieb

- 20: Drehwerkzeug
- 20b: zweites Drehwerkzeug
- 21: Schneide

- 40: Hauptzustellantrieb

- 50: Hauptquerantrieb
- 55: sekundären Querantrieb

- 80: Werkzeughalter
- 81: erster Linearmotor
- 82: erste Schwingspule
- 83: Schlitten
- 84: Schlittenschmiermittelleitungen
- 85: zweiter Linearmotor
- 86: zweite Schwingspule
- 87: Schmiermittelleitung

- 88: Druckluftanschluss

- 90: Kreuzschlitten
- 91: Kreuzschlittenantrieb
- 92: Frässtation
- 93: Fräskopf

- 100: Werkstück

- A: Rotationsachse
- B: Scheitel
- F: Stirnfläche
- G: Baueinheit
- H: Hauptschnittrichtung
- K: Krümmung
- QPS: Primäre und sekundäre Querbewegung
- QR: Querrichtung
- T: Tal
- SR: Schneidenradius
- X: Grenzabstand
- ZPS: Primäre und sekundäre Zustellbewegung
- ZR: Zustellrichtung

## Patentansprüche

1. **Verfahren** zur spanenden Bearbeitung einer Stirnfläche (F) eines um eine virtuelle Rotationsachse (A) angetriebenen Werkstücks (100) mit einem Drehwerkzeug (20) aufweisend eine Schneide (21), umfassend die folgenden Schritte:
- Rotieren des Werkstückes (100) um die virtuelle Rotationsachse (A);
- in Eingriff bringen der Schneide (21) mit der Stirnfläche (F) des Werkstücks (100) beabstandet von der Rotationsachse (A);
- Durchführen einer primären Querbewegung der Schneide (21) auf die Rotationsachse (A) zu, während die Schneide (21) weiterhin in die Stirnfläche (F) des rotierenden Werkstückes (100) eingreift, sodass die Schneide (21) durch die Überlagerung der Rotation des Werkstücks (100) und der Querbewegung der Schneide (21) entlang eines spiralförmigen Arbeitspfades über die Stirnfläche (F) geführt wird,
- Überlagern der primären Querbewegung mit einer gleichgerichteten sekundären Querbewegung der Schneide (21), die auf die Rotationsachse (A) zu und von der Rotationsachse (A) weg erfolgt, wobei die sekundäre Querbewegung (21) in Abhängigkeit von der Drehwinkelstellung des Werkstücks (100) durchgeführt wird,
- wobei die sekundäre Querbewegung der Schneide (21) exakt einen Hub bestehend aus einer Vorwärts- und einer Rückwärtsbewegung pro Umdrehung des Werkstücks (100) aufweist,
- wobei mit der Überlagerung der primären Querbewegung durch die sekundäre Querbewegung
o entlang des spiralförmigen Arbeitspfad wenigstens eine Delle oder herzartige Einkerbung des Arbeitspfades in Richtung der Rotationsachse (A) erzeugt wird; und/oder
oder spiralförmige Arbeitspfad relativ zur Rotationsachse seitlich versetzt wird; und/oder
o die Spiralform des spiralförmigen Arbeitspfads elliptisch verschlankt wird.

2. Verfahren nach Anspruch 1, **dadurch gekennzeichnet, dass** der spiralförmige Arbeitspfad ein Höhenprofil mit wenigstens einem Scheitel (B) und einem Tal (T) aufweist, wobei die größte Annäherung des Hubs an die Rotationsachse in dem Drehwinkel erfolgt, in dem die Rotationsachse (A) zwischen der Schneide (21) und dem Tal (T) liegt.

3. Verfahren nach Anspruch 2, **dadurch gekennzeichnet, dass** die Schneide (21) bei der größten Annäherung des Hubs an die Rotationsachse bis über die Rotationsachse (A) hinaus sowie bis in das Tal (T) bewegt wird.

4. Verfahren nach Anspruch 3, **dadurch gekennzeichnet, dass** die Schneide (21) bei der größten Annäherung des Hubs an die Rotationsachse im Bereich des Tals (T) über der Stirnfläche (F) schwebt und auf der gegenüberliegenden Seite vom Tal (T) mit der Stirnfläche (F) in Eingriff steht.

5. Verfahren nach einem der vorhergehenden Ansprüche, **dadurch gekennzeichnet, dass** die primäre Querbewegung ausschließlich eine Vorwärtsbewegung ist.

6. Verfahren nach einem der vorhergehenden Ansprüche, **dadurch gekennzeichnet, dass** die primäre Querbewegung ein kontinuierliches Geschwindigkeitsprofil aufweist.

7. Verfahren nach einem der vorhergehenden Ansprüche, **dadurch gekennzeichnet, dass** keine sekundäre Querbewegung außerhalb eines Grenzabstands (X) der Schneide (21) von der Rotationsachse (A) durchgeführt wird und die sekundäre Querbewegung erst ab dem Grenzabstand (X) erfolgt.

8. Verfahren nach Anspruch 7, **dadurch gekennzeichnet, dass** der Grenzabstand (X) kleiner als 2,00 mm, vorzugsweise kleiner als 1,20 mm, weiter bevorzugt kleiner als 0,70 mm, noch weiter bevorzugt kleiner als 0,50 mm, und besonders bevorzugt kleiner als 0,35 mm ist.

9. Verfahren nach einem der vorhergehenden Ansprüche, **dadurch gekennzeichnet, dass** der spiralförmige Arbeitspfad aus der Gruppe archimedische Spirale, logarithmische Spirale oder hyperbolische Spirale ist.

10. **Verwendung** einer Drehvorrichtung (1) zur spanenden Bearbeitung von Werkstücken (100) zur Durchführung des Verfahrens nach einem der vorhergehenden Ansprüche 1 bis 9, wobei die
Drehvorrichtung (1),
- einen Werkstückhalter (10),
o der zur Aufnahme des Werkstücks (100) ausgebildet und
o um eine virtuelle Rotationsachse (A) rotierend angetrieben ist,
- ein Drehwerkzeug (20) mit einer Schneide (21),
- einen Hauptzustellantrieb (40), der eine primäre Zustellbewegung in einer Zustellrichtung (ZR) bewirkt, wobei das Drehwerkzeug (20) und der Werkstückhalter (10) durch die Zustellbewegung aufeinander zu und voneinander weg bewegbar sind, und
- einen Hauptquerantrieb (50), der eine primäre Querbewegung in einer Querrichtung (QR) quer zur Zustellrichtung (ZR) bewirkt, wobei das Drehwerkzeug (20) und die Rotationsachse (A) durch die primäre Querbewegung aufeinander zu und voneinander weg bewegbar sind,
aufweist,
wobei die Drehvorrichtung (1) einen sekundären Querantrieb (55) aufweist, dessen sekundäre Querbewegungen gleichgerichtet zu denjenigen des Hauptquerantriebs (50) sind, wobei das Drehwerkzeug (20) und die Rotationsachse (A) durch die Überlagerung aus primären und sekundären Querbewegungen aufeinander zu und voneinander weg bewegbar sind.

11. Verwendung nach Anspruch 10, **dadurch gekennzeichnet, dass** die Drehvorrichtung (1) eine Werkzeugantriebseinheit (2) für eine Drehvorrichtung (1) zur spanenden Bearbeitung von Werkstücken (100) aufweist,
- mit einem Werkzeughalter (80) zur Aufnahme eines Drehwerkzeugs (20) mit einer Schneide (21),
- wobei der Werkzeughalter (80) mit einem ersten Linearmotor (81) aufweisend eine erste Schwingspule (82) oder ein erstes Piezoelement verschiebbar entlang einer Zustellrichtung (ZR) angetrieben ist, und
- wobei der Werkzeughalter (80) mit einem zweiten Linearmotor (85) aufweisend eine zweite Schwingspule (86) oder ein zweites Piezoelement in einer Querrichtung (QR) quer zu der Zustellrichtung (ZR) pendelnd oder verschiebbar angetrieben ist,
- wobei das Drehwerkzeug (20) mit der Schneide (21) in dem Werkzeughalter (80) aufgenommen ist,
- wobei der erste Linearmotor (81) eine sekundäre Zustellbewegung in der Zustellrichtung (ZR) bewirkt, die gleichgerichtet zu derjenigen des Hauptzustellantriebs (40) ist, wobei das Drehwerkzeug (20) und der Werkstückhalter (10) durch die Überlagerung aus primären und sekundären Zustellbewegungen aufeinander zu und voneinander weg bewegbar sind, und
- wobei der zweite Linearmotor (85) den sekundären Querantrieb (55) ausbildet.

12. Verwendung nach Anspruch 11, **dadurch gekennzeichnet, dass** der Werkzeughalter (80), der erste Linearmotor (81) und der zweite Linearmotor (85) eine Baugruppe (G) ausbilden oder Teil hiervon sind, wobei die Baugruppe (G) auf einem Kreuzschlitten (90) angeordnet ist, wobei der Kreuzschlitten (90) zum Hauptzustellantrieb (40) und Hauptquerantrieb (50) gehört und als Bewegungsachsen die primäre Zustellbewegung und primäre Querbewegung ermöglicht.

13. Verwendung nach einem der Ansprüche 11 oder 12, **dadurch gekennzeichnet, dass** der erste Linearmotor (81) gemeinsam mit dem Werkzeughalter (80) in der Querrichtung (QR) pendelnd oder verschiebbar mit dem zweiten Linearmotor (85) angetrieben ist.

14. Verwendung nach einem der Ansprüche 11 bis 13, **dadurch gekennzeichnet, dass** die freien Stellwege des Kreuzschlittens (90) wenigstens um das zehnfache größer sind als die freien Stellwege des ersten und zweiten Linearmotors (81, 85).

15. Verwendung nach einem der Ansprüche 11 bis 14, **dadurch gekennzeichnet, dass** der freie Stellwege des ersten Linearmotors (81) entlang der Zustellrichtung (ZR) wenigstens fünfmal, vorzugsweise wenigstens achtmal, und besonders bevorzugt wenigstens zehnmal so groß ist wie der freie Stellweg des zweiten Linearmotors (85) in der Querrichtung (QR).

16. Verwendung nach einem der Ansprüche 11 bis 15, **dadurch gekennzeichnet, dass** die Schneide (21) eine Krümmung (K) und einen Schneidenradius (SR) aufweist, wobei die Krümmung (K) der Schneide (21) des Drehwerkzeugs (20) einen Radius zwischen 3,0 mm und 12,0 mm, vorzugsweise zwischen 3,5 mm und 10,0 mm, weiter bevorzugt zwischen 4,0 mm und 9,0 mm und besonders bevorzugt zwischen 5,0 mm und 8,0 mm aufweist.

17. **Drehvorrichtung** (1) zur spanenden Bearbeitung von Werkstücken (100),
- mit einem Werkstückhalter (10),
o der zur Aufnahme des Werkstücks (100) ausgebildet und
o um eine virtuelle Rotationsachse (A) rotierend angetrieben ist, und
- mit einem Drehwerkzeug (20) mit einer Schneide (21),
- mit einem Hauptzustellantrieb (40), der eine primäre Zustellbewegung in einer Zustellrichtung (ZR) bewirkt, wobei das Drehwerkzeug (20) und der Werkstückhalter (10) durch die Zustellbewegung aufeinander zu und voneinander weg bewegbar sind, und
- mit einem Hauptquerantrieb (50), der eine primäre Querbewegung in einer Querrichtung (QR) quer zur Zustellrichtung (ZR) bewirkt, wobei das Drehwerkzeug (20) und die Rotationsachse (A) durch die primäre Querbewegung aufeinander zu und voneinander weg bewegbar sind,
wobei die Drehvorrichtung (1) einen sekundären Querantrieb (55) aufweist, dessen sekundäre Querbewegungen gleichgerichtet zu denjenigen des Hauptquerantriebs (50) sind, wobei das Drehwerkzeug (20) und die Rotationsachse (A) durch die Überlagerung aus primären und sekundären Querbewegungen aufeinander zu und voneinander weg bewegbar sind,
wobei die Drehvorrichtung (1) eine Werkzeugantriebseinheit zur spanenden Bearbeitung von Werkstücken (100) aufweist, mit
- einem Werkzeughalter (80) zur Aufnahme des Drehwerkzeugs (20) mit der Schneide (21),
- wobei der Werkzeughalter (80) mit einem ersten Linearmotor (81) aufweisend eine erste Schwingspule (82) oder ein erstes Piezoelement verschiebbar entlang der Zustellrichtung (ZR) angetrieben ist,
- wobei der Werkzeughalter (80) mit einem zweiten Linearmotor (85) aufweisend eine zweite Schwingspule (86) oder ein zweites Piezoelement in der Querrichtung (QR) quer zu der Zustellrichtung (ZR) pendelnd oder verschiebbar angetrieben ist,
- wobei das Drehwerkzeug (20) mit der Schneide (21) in dem Werkzeughalter (80) aufgenommen ist,
- wobei der erste Linearmotor (81) eine sekundäre Zustellbewegung in der Zustellrichtung (ZR) bewirkt, die gleichgerichtet zu derjenigen des Hauptzustellantriebs (40) ist, wobei das Drehwerkzeug (20) und der Werkstückhalter (10) durch die Überlagerung aus primären und sekundären Zustellbewegungen aufeinander zu und voneinander weg bewegbar sind,
- wobei der zweite Linearmotor (85) den sekundären Querantrieb (55) ausbildet,
- wobei der Werkzeughalter (80), der erste Linearmotor (81) und der zweite Linearmotor (85) eine Baugruppe (G) ausbilden oder Teil hiervon sind, wobei die Baugruppe (G) auf einem Kreuzschlitten (90) angeordnet ist, und
- wobei der Kreuzschlitten (90) zum Hauptzustellantrieb (40) und Hauptquerantrieb (50) gehört und als Bewegungsachsen die primäre Zustellbewegung und primäre Querbewegung ermöglicht.

## Claims

1. **Method** for the cutting machining of an end face (F) of a workpiece (100), which is driven about a virtual axis of rotation (A), with a turning tool (20) having a cutting edge (21), comprising the following steps:
- rotating the workpiece (100) about the virtual axis of rotation (A);
- bringing the cutting edge (21) into engagement with the end face (F) of the workpiece (100) at a distance from the axis of rotation (A);
- carrying out a primary transverse movement of the cutting edge (21) towards the axis of rotation (A) while the cutting edge (21) continues to engage in the end face (F) of the rotating workpiece (100), with the result that the cutting edge (21) is guided along a spiral work path over the end face (F) by the superimposition of the rotation of the workpiece (100) and of the transverse movement of the cutting edge (21),
- superimposing the primary transverse movement with an identically directed secondary transverse movement of the cutting edge (21) which occurs towards the axis of rotation (A) and away from the axis of rotation (A), wherein the secondary transverse movement (21) is carried out in dependence on the angle of rotation position of the workpiece (100),
- wherein the secondary transverse movement of the cutting edge (21) comprises exactly one stroke consisting of a forward and a rearward movement for each revolution of the workpiece (100),
- wherein, with the superimposition of the primary transverse movement by the secondary transverse movement,
o there is created, along the spiral work path, at least one indentation or heart-like notch of the work path in the direction of the axis of rotation (A); and/or
o the spiral work path is laterally offset relative to the axis or rotation; and/or
o the spiral shape of the spiral work path is narrowed elliptically.

2. Method according to Claim 1, **characterized in that** the spiral work path has a height profile with at least one crest (B) and one valley (T), wherein the nearest approach of the stroke to the axis of rotation occurs at the angle of rotation in which the axis of rotation (A) is situated between the cutting edge (21) and the valley (T).

3. Method according to Claim 2, **characterized in that,** during the nearest approach of the stroke to the axis of rotation, the cutting edge (21) is moved to a point beyond the axis of rotation (A) and into the valley (T).

4. Method according to Claim 3, **characterized in that,** during the nearest approach of the stroke to the axis of rotation, the cutting edge (21) hovers in the region of the valley (T) over the end face (F) and is engagement with the end face (F) on the opposite side from the valley (T).

5. Method according to one of the preceding claims, **characterized in that** the primary transverse movement is exclusively a forward movement.

6. Method according to one of the preceding claims, **characterized in that** the primary transverse movement has a continuous speed profile.

7. Method according to one of the preceding claims, **characterized in that** no secondary transverse movement is carried out outside of a limit distance (X) of the cutting edge (21) from the axis of rotation (A), and the secondary transverse movement occurs only from the limit distance (X).

8. Method according to Claim 7, **characterized in that** the limit distance (X) is less than 2.00 mm, preferably less than 1.20 mm, further preferably less than 0.70 mm, still further preferably less than 0.50 mm, and particularly preferably less than 0.35 mm.

9. Method according to one of the preceding claims, **characterized in that** the spiral work path is from the following group: Archimedean spiral, logarithmic spiral or hyperbolic spiral.

10. **Use** of a turning device (1) for the cutting machining of workpieces (100) for carrying out the method according to one of the preceding Claims 1 to 9, wherein the turning device (1) has
- a workpiece holder (10),
∘ which is designed to receive the workpiece (100) and
∘ is driven to rotate about a virtual axis of rotation (A),
- a turning tool (20) with a cutting edge (21),
- a main infeed drive (40) which produces a primary infeed movement in an infeed direction (ZR), wherein the turning tool (20) and the workpiece holder (10) can be moved towards one another and away from one other by the infeed movement, and
- a main transverse drive (50) which produces a primary transverse movement in a transverse direction (QR) transversely to the infeed direction (ZR), wherein the turning tool (20) and the axis of rotation (A) can be moved towards one another and away from one another by the primary transverse movement,
wherein the turning device (1) has a secondary transverse drive (55) whose secondary transverse movements are oriented in the same direction as those of the main transverse drive (50), wherein the turning tool (20) and the axis of rotation (A) can be moved towards one another and away from one another by the superimposition of primary and secondary transverse movements.

11. Use according to Claim 10, **characterized in that** the turning device (1) has a tool drive unit (2) for a turning device (1) for the cutting machining of workpieces (100),
- with a tool holder (80) for receiving a turning tool (20) having a cutting edge (21),
- wherein the tool holder (80) is driven in a displaceable manner along an infeed direction (ZR) by a first linear motor (81) having a first moving coil (82) or a first piezo element, and
- wherein the tool holder (80) is driven in a pendular or displaceable manner in a transverse direction (QR) transversely to the infeed direction (ZR) by a second linear motor (85) having a second moving coil (86) or a second piezo element,
- wherein the turning tool (20) with the cutting edge (21) is received in the tool holder (80),
- wherein the first linear motor (81) produces a secondary infeed movement in the infeed direction (ZR) which is oriented in the same direction as that of the main infeed drive (40), wherein the turning tool (20) and the workpiece holder (10) can be moved towards one another and away from one another by the superimposition of primary and secondary infeed movements, and
- wherein the second linear motor (85) forms the secondary transverse drive (55).

12. Use according to Claim 11, **characterized in that** the tool holder (80), the first linear motor (81) and the second linear motor (85) form an assembly (G) or are part thereof, wherein the assembly (G) is arranged on a cross slide (90), wherein the cross slide (90) belongs to the main infeed drive (40) and main transverse drive (50) and, as movement axes, allows the primary infeed movement and primary transverse movement.

13. Use according to either of Claims 11 and 12, **characterized in that** the first linear motor (81), together with the tool holder (80), is driven in a pendular or displaceable manner in the transverse direction (QR) by the second linear motor (85).

14. Use according to one of Claims 11 to 13, **characterized in that** the free adjustment travels of the cross slide (90) are at least ten times greater than the free adjustment travels of the first and second linear motor (81, 85).

15. Use according to one of Claims 11 to 14, **characterized in that** the free adjustment travel of the first linear motor (81) along the infeed direction (ZR) is at least five times, preferably at least eight times, and particularly preferably at least ten times, as great as the free adjustment travel of the second linear motor (85) in the transverse direction (QR).

16. Use according to one of Claims 11 to 15, **characterized in that** the cutting edge (21) has a curvature (K) and a cutting edge radius (SR), wherein the curvature (K) of the cutting edge (21) of the turning tool (20) has a radius between 3.0 mm and 12.0 mm, preferably between 3.5 mm and 10.0 mm, further preferably between 4.0 mm and 9.0 mm and particularly preferably between 5.0 mm and 8.0 mm.

17. **Turning device** (1) for the cutting machining of workpieces (100),
- having a workpiece holder (10),
∘ which is designed to receive the workpiece (100) and
∘ is driven to rotate about a virtual axis of rotation (A), and
- having a turning tool (20) with a cutting edge (21),
- having a main infeed drive (40) which produces a primary infeed movement in an infeed direction (ZR), wherein the turning tool (20) and the workpiece holder (10) can be moved towards one another and away from one other by the infeed movement, and
- having a main transverse drive (50) which produces a primary transverse movement in a transverse direction (QR) transversely to the infeed direction (ZR), wherein the turning tool (20) and the axis of rotation (A) can be moved towards one another and away from one another by the primary transverse movement,
wherein the turning device (1) has a secondary transverse drive (55) whose secondary transverse movements are oriented in the same direction as those of the main transverse drive (50), wherein the turning tool (20) and the axis of rotation (A) can be moved towards one another and away from one another by the superimposition of primary and secondary transverse movements,
wherein the turning device (1) has a tool drive unit for the cutting machining of workpieces (100), having
- a tool holder (80) for receiving the turning tool (20) with the cutting edge (21),
- wherein the tool holder (80) is driven in a displaceable manner along the infeed direction (ZR) by a first linear motor (81) having a first moving coil (82) or a first piezo element,
- wherein the tool holder (80) is driven in a pendular or displaceable manner in the transverse direction (QR) transversely to the infeed direction (ZR) by a second linear motor (85) having a second moving coil (86) or a second piezo element,
- wherein the turning tool (20) with the cutting edge (21) is received in the tool holder (80),
- wherein the first linear motor (81) produces a secondary infeed movement in the infeed direction (ZR) which is oriented in the same direction as that of the main infeed drive (40), wherein the turning tool (20) and the workpiece holder (10) can be moved towards one another and away from one another by the superimposition of primary and secondary infeed movements,
- wherein the second linear motor (85) forms the secondary transverse drive (55),
- wherein the tool holder (80), the first linear motor (81) and the second linear motor (82) form an assembly (G) or are part thereof, wherein the assembly (G) is arranged on a cross slide (90), and
- wherein the cross slide (90) belongs to the main infeed drive (40) and main transverse drive (50) and, as movement axes, allows the primary infeed movement and primary transverse movement.

## Revendications

1. **Procédé** pour l'usinage par enlèvement de copeaux d'une surface frontale (F) d'une pièce (100) entraînée autour d'un axe de rotation virtuel (A) avec un outil rotatif (20) présentant un tranchant (21), comprenant les étapes suivantes :
- la rotation de la pièce (100) autour de l'axe de rotation virtuel (A) ;
- la mise en engagement du tranchant (21) avec la surface frontale (F) de la pièce (100) espacée de l'axe de rotation (A) ;
- la réalisation d'un mouvement transversal primaire du tranchant (21) vers l'axe de rotation (A), tandis que le tranchant (21) continue à s'engager dans la surface frontale (F) de la pièce (100) en rotation, de telle sorte que le tranchant (21) est guidé sur la surface frontale (F) le long d'une trajectoire de travail en forme de spirale par la superposition de la rotation de la pièce (100) et du mouvement transversal du tranchant (21),
- la superposition du mouvement transversal primaire avec un mouvement transversal secondaire de même sens du tranchant (21), qui s'effectue vers l'axe de rotation (A) et en s'éloignant de l'axe de rotation (A), le mouvement transversal secondaire (21) étant réalisé en fonction de la position angulaire de rotation de la pièce (100),
- le mouvement transversal secondaire du tranchant (21) présentant exactement une course constituée d'un mouvement vers l'avant et d'un mouvement vers l'arrière par tour de la pièce (100),
- la superposition du mouvement transversal primaire par le mouvement transversal secondaire
- produisant le long de la trajectoire de travail en forme de spirale au moins une indentation ou une entaille en forme de coeur de la trajectoire de travail en direction de l'axe de rotation (A) ; et/ou
- décalant latéralement la trajectoire de travail en forme de spirale par rapport à l'axe de rotation ; et/ou
- affinant de manière elliptique la forme de spirale de la trajectoire de travail en forme de spirale.

2. Procédé selon la revendication 1, **caractérisé en ce que** la trajectoire de travail en forme de spirale présente un profil de hauteur avec au moins un sommet (B) et un creux (T), la course se rapprochant le plus de l'axe de rotation à l'angle de rotation auquel l'axe de rotation (A) est situé entre le tranchant (21) et le creux (T).

3. Procédé selon la revendication 2, **caractérisé en ce que** le tranchant (21) est déplacé au-delà de l'axe de rotation (A) et jusque dans le creux (T) au moment où la course se rapproche le plus de l'axe de rotation.

4. Procédé selon la revendication 3, **caractérisé en ce que** le tranchant (21) flotte au-dessus de la surface frontale (F) dans la zone du creux (T) au moment où la course se rapproche le plus de l'axe de rotation et est en engagement avec la surface frontale (F) sur le côté opposé du creux (T).

5. Procédé selon l'une quelconque des revendications précédentes, **caractérisé en ce que** le mouvement transversal primaire est exclusivement un mouvement vers l'avant.

6. Procédé selon l'une quelconque des revendications précédentes, **caractérisé en ce que** le mouvement transversal primaire présente un profil de vitesse continu.

7. Procédé selon l'une quelconque des revendications précédentes, **caractérisé en ce qu'**aucun mouvement transversal secondaire n'est réalisé en dehors d'une distance limite (X) du tranchant (21) par rapport à l'axe de rotation (A) et le mouvement transversal secondaire n'est effectué qu'à partir de la distance limite (X).

8. Procédé selon la revendication 7, **caractérisé en ce que** la distance limite (X) est inférieure à 2,00 mm, de préférence inférieure à 1,20 mm, de manière davantage préférée inférieure à 0,70 mm, de manière encore davantage préférée inférieure à 0,50 mm, et de manière particulièrement préférée inférieure à 0,35 mm.

9. Procédé selon l'une quelconque des revendications précédentes, **caractérisé en ce que** la trajectoire de travail en forme de spirale est du groupe d'une spirale d'Archimède, d'une spirale logarithmique ou d'une spirale hyperbolique.

10. **Utilisation** d'un dispositif rotatif (1) pour l'usinage par enlèvement de matière de pièces (100) pour réaliser le procédé selon l'une quelconque des revendications 1 à 9 précédentes, le dispositif rotatif (1) présentant,
- un porte-pièce (10),
- qui est configuré pour recevoir la pièce (100) et
- qui est entraîné en rotation autour d'un axe de rotation virtuel (A),
- un outil rotatif (20) avec un tranchant (21),
- un entraînement d'avance principal (40) qui provoque un mouvement d'avance primaire dans une direction d'avance (ZR), l'outil rotatif (20) et le porte-pièce (10) pouvant être rapprochés et éloignés l'un de l'autre par le mouvement d'avance, et
- un entraînement transversal principal (50) qui provoque un mouvement transversal primaire dans une direction transversale (QR) transversale à la direction d'avance (ZR), l'outil rotatif (20) et l'axe de rotation (A) pouvant être rapprochés et éloignés l'un de l'autre par le mouvement transversal primaire,
le dispositif rotatif (1) présentant un entraînement transversal secondaire (55) dont les mouvements transversaux secondaires sont de même sens que ceux de l'entraînement transversal principal (50), l'outil rotatif (20) et l'axe de rotation (A) pouvant être rapprochés et éloignés l'un de l'autre par la superposition de mouvements transversaux primaires et secondaires.

11. Utilisation selon la revendication 10, **caractérisée en ce que** le dispositif rotatif (1) présente une unité d'entraînement d'outil (2) pour un dispositif rotatif (1) pour l'usinage par enlèvement de copeaux de pièces (100),
- avec un porte-outil (80) pour recevoir un outil rotatif (20) avec un tranchant (21),
- le porte-outil (80) étant entraîné en déplacement le long d'une direction d'avance (ZR) par un premier moteur linéaire (81) présentant une première bobine mobile (82) ou un premier élément piézoélectrique, et
- le porte-outil (80) étant entraîné en oscillation ou en déplacement dans une direction transversale (QR) transversale à la direction d'avance (ZR) par un deuxième moteur linéaire (85) présentant une deuxième bobine mobile (86) ou un deuxième élément piézoélectrique,
- l'outil rotatif (20) avec le tranchant (21) étant reçu dans le porte-outil (80),
- le premier moteur linéaire (81) provoquant un mouvement d'avance secondaire dans la direction d'avance (ZR), qui est de même sens que celui de l'entraînement d'avance principal (40), l'outil rotatif (20) et le porte-pièce (10) pouvant être rapprochés et éloignés l'un de l'autre par la superposition de mouvements d'avance primaires et secondaires, et
- le deuxième moteur linéaire (85) formant l'entraînement transversal secondaire (55).

12. Utilisation selon la revendication 11, **caractérisée en ce que** le porte-outil (80), le premier moteur linéaire (81) et le deuxième moteur linéaire (85) forment un ensemble (G) ou en font partie, l'ensemble (G) étant agencé sur un chariot croisé (90), le chariot croisé (90) appartenant à l'entraînement d'avance principal (40) et à l'entraînement transversal principal (50) et permettant le mouvement d'avance primaire et le mouvement transversal primaire en tant qu'axes de mouvement.

13. Utilisation selon l'une quelconque des revendications 11 ou 12, **caractérisée en ce que** le premier moteur linéaire (81) est entraîné en oscillation ou en déplacement conjointement avec le porte-outil (80) dans la direction transversale (QR) par le deuxième moteur linéaire (85).

14. Utilisation selon l'une quelconque des revendications 11 à 13, **caractérisée en ce que** les parcours de manoeuvre libres du chariot croisé (90) sont au moins dix fois supérieurs aux parcours de manoeuvre libres des premier et deuxième moteurs linéaires (81, 85) .

15. Utilisation selon l'une quelconque des revendications 11 à 14, **caractérisée en ce que** le parcours de manoeuvre libre du premier moteur linéaire (81) le long de la direction d'avance (ZR) est au moins cinq fois, de préférence au moins huit fois, et de manière particulièrement préférée au moins dix fois plus grand que le parcours de manoeuvre libre du deuxième moteur linéaire (85) dans la direction transversale (QR).

16. Utilisation selon l'une quelconque des revendications 11 à 15, **caractérisée en ce que** le tranchant (21) présente une courbure (K) et un rayon de tranchant (SR), la courbure (K) du tranchant (21) de l'outil rotatif (20) présentant un rayon compris entre 3,0 mm et 12,0 mm, de préférence entre 3,5 mm et 10,0 mm, de manière davantage préférée entre 4,0 mm et 9,0 mm et de manière particulièrement préférée entre 5,0 mm et 8,0 mm.

17. **Dispositif rotatif** (1) pour l'usinage par enlèvement de copeaux de pièces (100),
- avec un porte-pièce (10),
- qui est configuré pour recevoir la pièce (100) et
- qui est entraîné en rotation autour d'un axe de rotation virtuel (A), et
- avec un outil rotatif (20) avec un tranchant (21),
- avec un entraînement d'avance principal (40), qui provoque un mouvement d'avance primaire dans une direction d'avance (ZR), l'outil rotatif (20) et le porte-pièce (10) pouvant être rapprochés et éloignés l'un de l'autre par le mouvement d'avance, et
- avec un entraînement transversal principal (50), qui provoque un mouvement transversal primaire dans une direction transversale (QR) transversale à la direction d'avance (ZR), l'outil rotatif (20) et l'axe de rotation (A) pouvant être rapprochés et éloignés l'un de l'autre par le mouvement transversal primaire,
le dispositif rotatif (1) présentant un entraînement transversal secondaire (55) dont les mouvements transversaux secondaires sont de même sens que ceux de l'entraînement transversal principal (50), l'outil rotatif (20) et l'axe de rotation (A) pouvant être rapprochés et éloignés l'un de l'autre par la superposition de mouvements transversaux primaires et secondaires,
le dispositif rotatif (1) présentant une unité d'entraînement d'outil pour l'usinage par enlèvement de copeaux de pièces (100), avec
- un porte-outil (80) pour recevoir l'outil rotatif (20) avec le tranchant (21),
- le porte-outil (80) étant entraîné en déplacement le long de la direction d'avance (ZR) par un premier moteur linéaire (81) présentant une première bobine mobile (82) ou un premier élément piézoélectrique,
- le porte-outil (80) étant entraîné en oscillation ou en déplacement dans la direction transversale (QR) transversalement à la direction d'avance (ZR) par un deuxième moteur linéaire (85) présentant une deuxième bobine mobile (86) ou un deuxième élément piézoélectrique,
- l'outil rotatif (20) avec le tranchant (21) étant reçu dans le porte-outil (80),
- le premier moteur linéaire (81) provoquant un mouvement d'avance secondaire dans la direction d'avance (ZR), qui est de même sens que celui de l'entraînement d'avance principal (40), l'outil rotatif (20) et le porte-pièce (10) pouvant être rapprochés et éloignés l'un de l'autre par la superposition de mouvements d'avance primaires et secondaires,
- le deuxième moteur linéaire (85) formant l'entraînement transversal secondaire (55),
- le porte-outil (80), le premier moteur linéaire (81) et le deuxième moteur linéaire (85) formant un ensemble (G) ou en faisant partie, l'ensemble (G) étant agencé sur un chariot croisé (90), et
- le chariot croisé (90) appartenant à l'entraînement d'avance principal (40) et à l'entraînement transversal principal (50) et permettant le mouvement d'avance primaire et le mouvement transversal primaire en tant qu'axes de mouvement.
